(19) Europäisches Patentamt
European Patent Office
Office européen des brevets

(11) EP 4 071 926 A1

(12) **EUROPEAN PATENT APPLICATION**
published in accordance with Art. 153(4) EPC

(43) Date of publication:
**12.10.2022 Bulletin 2022/41**

(21) Application number: **20897408.9**

(22) Date of filing: **30.11.2020**

(51) International Patent Classification (IPC):
***H01Q 1/22*** *(2006.01)* ***H01Q 1/32*** *(2006.01)*
***H01Q 1/40*** *(2006.01)*

(52) Cooperative Patent Classification (CPC):
**B32B 17/10036; B32B 17/1022; B32B 17/10293; B32B 17/10504; B32B 17/10761; H01Q 1/22; H01Q 1/32; H01Q 1/40**

(86) International application number:
**PCT/JP2020/044469**

(87) International publication number:
**WO 2021/112031 (10.06.2021 Gazette 2021/23)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **03.12.2019 JP 2019218850**
**30.07.2020 JP 2020129756**

(71) Applicant: **Kuraray Co., Ltd.**
**Kurashiki-shi, Okayama 710-0801 (JP)**

(72) Inventors:
- **SUNAMOTO, Tatsuya**
**Tokyo 100-8115 (JP)**
- **MIYAUCHI, Chikako**
**Tokyo 100-8115 (JP)**
- **ISOUE, Koichiro**
**Kurashiki-shi, Okayama 713-8550 (JP)**

(74) Representative: **Vossius & Partner**
**Patentanwälte Rechtsanwälte mbB**
**Siebertstraße 3**
**81675 München (DE)**

(54) **ANTENNA SYSTEM AND ANTENNA CIRCUIT BOARD**

(57) Provided is an antenna system useful for communication using high-frequency waves. The antenna system (100) comprises a first glass layer (101) that transmits high-frequency waves; a low-dielectric layer (103) having a lower dielectric constant than that of the first glass layer (101), the low-dielectric layer disposed adjacent to the first glass layer (101) and transmitting the high-frequency waves entering through the first glass layer (101); and an antenna circuit board (107) disposed adjacent to the low-dielectric layer (103) and including a high-frequency insulation layer (105) that receives the high-frequency waves entering through the low-dielectric layer (103).

Fig. 1

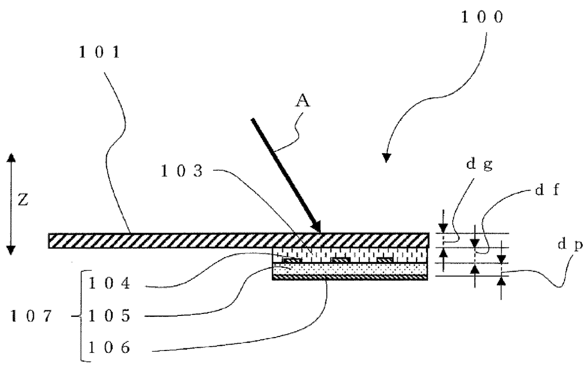


EP 4 071 926 A1

## Description

CROSS REFERENCE TO THE RELATED APPLICATION

This application is based on and claims Convention priority to Japanese patent application No. 2019-218850, filed December 3, 2019, and Japanese patent application No. 2020-129756, filed July 30, 2020, the entire disclosures of which are herein incorporated by reference as a part of this application.

FIELD OF THE INVENTION

The present invention relates to an antenna system useful for high-frequency communication as well as to an antenna circuit board useful for such an antenna system.

BACKGROUND OF THE INVENTION

It is a known technique to install an antenna for transmission and reception of a car phone and/or a mobile phone to a movable body such as an automobile. For example, Patent Document 1 (JP Laid-open Patent Publication No. 2007-53505) describes that an antenna of a conductive line(s) which is arranged on a window glass surface or an insulation member surface of a body part of a movable body such that the antenna is suitable for reception of radio waves for UHF or VHF television broadcasting, as well as transmission and reception of broadband radio waves for, e.g., car phones, mobile phones, personal radios, commercial radios, and personal handy-phone systems (PHS).

CONVENTIONAL ART DOCUMENT

PATENT DOCUMENT

[Patent Document 1] JP Laid-open Patent Publication No. 2007-53505

SUMMARY OF THE INVENTION

However, radio waves for UHF or VHF broadcasting and radio waves used for, e.g., car phones, mobile phones, personal radios, commercial radios, and PHS can transmit only a limited amount of information, and this amount of information cannot be increased. In recent years, the amount of information to be transmitted has been continuously increasing, so that it is necessary to use high-frequency GHz bands in order to transfer a large amount of information.
An object of the present invention is to provide an antenna system united with a glass layer and having excellent transmission properties in the GHz bands.
Another object of the present invention is to provide an antenna circuit board having excellent transmission properties in the GHz bands for communication through a glass layer.
Yet another object of the present invention is to provide a laminate comprising a low-dielectric layer and an antenna circuit board having excellent transmission properties in the GHz bands for communication through a glass layer.
In order to solve the problems, the inventors of the present invention considered use of an antenna circuit board having high precision for high-frequency waves, and the inventors then found a new problem that high-frequency radio waves having shorter transmission distances are affected by obstacles that do not affect conventional radio waves in MHz bands, resulting in attenuation of the radio waves reaching the antenna circuit board.
The inventors have finally found that where a glass that transmits high-frequency waves is disposed adjacent to a low-dielectric layer having a lower dielectric constant than that of the glass such that the radio waves reach an antenna circuit board through the low-dielectric layer, high-frequency waves can be used with high precision. The present inventors thus achieved the present invention.
That is, the present invention may include the following aspects.

Aspect 1

An antenna system comprising:

a first glass layer that transmits high-frequency waves;
a low-dielectric layer having a lower dielectric constant than that of the first glass layer, the low-dielectric layer disposed adjacent to the first glass layer and transmitting the high-frequency waves entering through the first glass layer; and

an antenna circuit board disposed adjacent to the low-dielectric layer and including a high-frequency insulation layer (insulation layer used in high frequency circuit) that receives the high-frequency waves entering through the low-dielectric layer,

wherein the antenna system is configured to be used at a frequency of 1 GHz or higher (preferably 2 GHz or higher, more preferably 6 GHz or higher, further preferably 30 GHz or higher, and particularly preferably 50 GHz or higher).

Aspect 2

The antenna system according to aspect 1, wherein the high-frequency insulation layer comprises a thermoplastic liquid crystal polymer or a polyimide.

Aspect 3

The antenna system according to aspect 1 or 2, wherein in each of a first direction and a second direction orthogonal to the first direction on a plane, the first glass layer has a dielectric constant εg of from 5.5 to 7.5 (preferably from 5.8 to 7.3, and more preferably from 6.0 to 7.0), and the low-dielectric layer has a dielectric constant εf of from 2.0 to 4.0 (preferably from 2.2 to 3.5, and more preferably from 2.4 to 3.0), each dielectric constant being measured at a frequency of 28 GHz.

Aspect 4

The antenna system according to any one of aspects 1 to 3, wherein in each of a first direction and a second direction orthogonal to the first direction on a plane, the first glass layer has a dielectric loss tangent tanδg of 0.05 or lower (preferably 0.03 or lower, and more preferably 0.02 or lower), and the low-dielectric layer has a dielectric loss tangent tanδf of 0.05 or lower (preferably 0.03 or lower, and more preferably 0.01 or lower), each dielectric loss tangent being measured at a frequency of 28 GHz.

Aspect 5

The antenna system according to any one of aspects 1 to 4, wherein the low-dielectric layer comprises at least one selected from a group consisting of a polyvinyl acetal resin, an olefin-vinyl carboxylate copolymer resin, an ionomer resin, and an acrylic resin.

Aspect 6

The antenna system according to any one of aspects 1 to 5, wherein the high-frequency insulation layer has a dielectric constant εp of from 2.0 to 4.0 (preferably from 2.2 to 3.5, and more preferably from 2.4 to 3.0) in each of a first direction and a second direction orthogonal to the first direction on a plane, the dielectric constant being measured at a frequency of 28 GHz.

Aspect 7

The antenna system according to any one of aspects 1 to 6, wherein the high-frequency insulation layer has a dielectric loss tangent tanδp of 0.010 or lower (preferably 0.005 or lower, and more preferably 0.003 or lower) in each of a first direction and a second direction orthogonal to the first direction on a plane, the dielectric loss tangent being measured at a frequency of 28 GHz.

Aspect 8

The antenna system according to any one of aspects 1 to 7, wherein a ratio εf/εp of the dielectric constant εf of the low-dielectric layer to the dielectric constant εp of the high-frequency insulation layer is from 30/70 to 60/40 (preferably from 35/65 to 60/40, and more preferably from 38/62 to 55/45).

Aspect 9

The antenna system according to any one of aspects 1 to 8, wherein the low-dielectric layer has a thickness of ($\lambda/4 \times n \pm 0.050$) mm (λ is a wavelength of high-frequency waves; and n is an integer) (preferably ($\lambda/4 \times n \pm 0.030$) mm, and more preferably ($\lambda/4 \times n \pm 0.025$) mm).

Aspect 10

The antenna system according to any one of aspects 1 to 9, wherein the first glass layer comprises at least one selected from a group consisting of a soda-lime glass, a borate glass, a borosilicate glass, an aluminosilicate glass, a quartz glass, a non-alkaline glass, and a low-alkaline glass.

Aspect 11

The antenna system according to any one of aspects 1 to 10, further comprising a second glass layer, wherein the low-dielectric layer and the antenna circuit board are arranged between the first glass layer and the second glass layer.

Aspect 12

The antenna system according to any one of aspects 1 to 11, wherein the antenna system constitutes a vehicle glass or a building glass.

Aspect 13

The antenna system according to any one of aspects 1 to 11, wherein the antenna system is configured to receive radio waves in an installed state in a vehicle, a building, or a civil engineering structure.

Aspect 14

An antenna circuit board configured to be used for the antenna system as recited in any one of aspects 1 to 13.

Aspect 15

A laminate comprising:

an antenna circuit board; and
a low-dielectric layer disposed adjacent to the antenna circuit board,
the laminate being configured to be used for the antenna system as recited in any one of aspects 1 to 14.

The present invention encompasses any combination of at least two features disclosed in the claims and/or the specification and/or the drawings. In particular, any combination of two or more of the appended claims should be equally construed as included within the scope of the present invention.

EFFECTS OF THE INVENTION

According to the present invention, an antenna system comprising a high-frequency antenna circuit board, a low-dielectric layer and a glass layer in this order, i.e., the low-dielectric layer interposed the high-frequency antenna circuit board and the glass layer makes it possible to suppress attenuation of high-frequency waves to enhance transmission properties of the antenna circuit board for the high-frequency waves, so that a large amount of information can be transferred.

BRIEF DESCRIPTION OF THE DRAWINGS

The present invention will be more clearly understood from the following description of preferred embodiments thereof, when taken in conjunction with the accompanying drawings. The embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like or corresponding parts throughout the several views. The drawings are not necessarily shown at a consistent scale and are exaggerated in order to illustrate the principle of the present invention. In the figures,

Fig. 1 is a schematic cross-sectional view for illustrating an antenna system according to a first embodiment of the present invention;

Fig. 2 is a schematic cross-sectional view for illustrating an antenna system according to a second embodiment of the present invention;

Fig. 3 is a schematic cross-sectional view for illustrating an antenna system according to a third embodiment of the present invention;

Fig. 4 is a schematic cross-sectional view for illustrating an antenna system according to a fourth embodiment of the present invention;

Fig. 5 is a schematic cross-sectional view for illustrating an antenna system according to a fifth embodiment of the present invention; and

Fig. 6 is a schematic cross-sectional view for illustrating an antenna system according to a sixth embodiment of the present invention.

## DESCRIPTION OF THE EMBODIMENTS

An antenna system according to the present invention at least comprises: a first glass layer that transmits high-frequency waves; a low-dielectric layer having a lower dielectric constant than that of the first glass layer, the low-dielectric layer disposed adjacent to the first glass layer and transmitting the high-frequency waves entering through the first glass layer; and an antenna circuit board disposed adjacent to the low-dielectric layer and including a high-frequency insulation layer that receives the high-frequency waves entering through the low-dielectric layer.

The antenna system of the present invention may be adapted for high-frequency waves with a frequency of, for example, 1 GHz or higher, preferably 2 GHz or higher, more preferably 6 GHz or higher, further preferably 30 GHz or higher, and particularly preferably 50 GHz or higher. An upper limit of the frequency is not specifically restricted and may be, e.g., 400 GHz or lower, and preferably 300 GHz or lower.

Hereinafter, specific examples of embodiments of the antenna system according to the present invention will be described with reference to the drawings. The antenna system of the present invention, however, will not be limited to such exemplary embodiments.

### First Embodiment

Fig. 1 is a schematic cross-sectional view for illustrating a production method of an antenna system according to a first embodiment. As shown in Fig. 1, the antenna system 100 according to the first embodiment comprises a first glass layer 101, a low-dielectric layer 103 having a lower dielectric constant than that of the first glass layer 101, and an antenna circuit board 107. The first glass layer 101 and the low-dielectric layer 103 have parts adjacent to each other in a thickness direction. The low-dielectric layer 103 and the antenna circuit board 107 have parts adjacent to each other in the thickness direction.

Fig. 1 shows only a single antenna circuit board; however, one antenna system may include 1 or more (e.g., 1 to 10) antenna circuit boards adjacent to the low-dielectric layer. In a case where there are a plurality of antenna circuit boards, the antenna system may include a non-high-frequency antenna circuit board (a circuit board for a frequency below 1 GHz) so as to be adapted for multiband application. The same shall apply to the embodiments described later.

Examples of the first glass layer 101 may include a window glass. The position of the antenna circuit board within a plane of the window glass is not restricted to a specific position. For example, as shown in Fig. 1, the antenna circuit board 107 may be arranged such that one end portion of the antenna circuit board is at an end portion of the window glass, or such that the one end portion of the antenna circuit board 107 (an outermost end portion of the antenna circuit board) is located inward (e.g., approximately 1- to 10-cm inward) with respect to end portions of the window glass. As with the window glass, the antenna circuit board may be arranged on vehicle glass (windshield glass, side window glass, rear window glass).

For example, if visibility is required as in a case of window glass, automobile glass, etc., the antenna circuit board 107 may be preferably arranged at a position where the antenna circuit board does not interrupt a viewer. For example, an antenna circuit of the antenna circuit board 107 may be arranged at an end portion region located 0-cm to 10-cm inward from an end portion of the first glass layer 103. In addition, in order to prevent rust or the like caused by dew condensation in an end portion, the antenna circuit of the antenna circuit board 107 may be arranged apart from an end portion of the first glass layer 103. For example, the antenna circuit may be arranged in an end portion region located 1-cm inward or more from an end portion of the first glass layer 103 (preferably a region located 1-cm to 10-cm inward). The same shall apply to the embodiments described later.

In Fig. 1, a high-frequency wave A indicated with a single-headed arrow toward the first glass layer 101 enters the first glass layer 101 from outside and exits to inside of the first glass layer 101. Therefore, in the thickness direction Z indicated with a double-headed arrow, the first glass layer 101 has an outer surface on one side and an inner surface on the other side. The low-dielectric layer 103 is disposed adjacent to the first glass layer 101 on the inner side in the thickness direction Z, and the antenna circuit board 107 is disposed adjacent to the low-dielectric layer 103 on the inner

side in the thickness direction Z.

The high-frequency waves A enter from the outer surface of the first glass layer 101 and passes through the low-dielectric layer 103 adjacent to the first glass layer 101 to reach the antenna circuit board 107. Once the high-frequency waves A have reached the antenna circuit board 107, the high-frequency waves are received by the antenna circuit board 107. It should be noted that even if the present specification describes an embodiment in terms of reception only, such an embodiment may enable not only reception but also transmission, and the same shall apply to all embodiments.

The antenna circuit board 107 includes: a high-frequency insulation layer (hereinafter, sometimes simply referred to as "insulation layer") 105; a circuit layer 104 arranged on one side of the insulation layer 105 (e.g., on the outer surface in the thickness direction Z); and a conductor layer 106 arranged on the other side of the insulation layer 105 (e.g., on the inner surface in the thickness direction Z). Fig. 1 shows only a single circuit layer for the sake of simplicity; however, the insulation layer may also include a non-illustrated inner layer circuit(s) and the like within the insulation layer, so that the antenna circuit board 107 may be a multi-layered circuit board. The conductor layer 106 may include a circuit pattern if needed or may be a reflective metal layer. Reflection of the high-frequency waves A entering the antenna circuit board 107 by such a reflective metal layer of the conductor layer 106 can improve a utilization efficiency of the high-frequency waves A in the antenna circuit board 107,

The high-frequency waves A have a wavelength $\lambda$ at a predetermined frequency, and the high-frequency waves entering the first glass layer 101 are partly reflected without reaching the antenna circuit board 107. The low-dielectric layer 103 has a lower dielectric constant $\varepsilon f$ than a dielectric constant $\varepsilon g$ of the first glass layer 101 so as to reduce a reflectance R of the incident high-frequency waves A from entering the first glass layer 101 up to reaching the surface of the antenna circuit board 107, so that a larger proportion of the high-frequency waves A can reach the antenna circuit board 107.

In the antenna system 100, in the thickness direction Z, the first glass layer 101 has a thickness dg, the low-dielectric layer 103 has a thickness df above the antenna circuit board 107, and the insulation layer 105 within the antenna circuit board 107 has a thickness dp.

In a case where a circuit part (circuit layer 104) occupies less than half of the in-plane area, the thickness df of the low-dielectric layer 103 is determined as a distance between the first glass layer 101 and the insulation layer 105 ignoring the circuit part, which is still called as the thickness df of the low-dielectric layer 103 for the sake of convenience.

The thickness df above the antenna circuit board 107 may be a thickness of the low-dielectric layer disposed on an incident side of the high-frequency waves A with respect to the antenna circuit board.

The thickness dg of the first glass layer 101 can be suitably set within a range of, for example, from 0.1 to 100 mm depending on an intended use of an object to which the first glass layer is attached. For example, the thickness may be from about 0.5 to 20 mm (e.g., from 1 to 20 mm), preferably from about 1 to 15 mm (e.g., from 3 to 13 mm), and more preferably from about 1.5 to 10 mm (e.g., from 4 to 10 mm). For example, the first glass layer 101 may constitute a first glass layer of a vehicle, or a first glass layer of a building, or a first glass layer included in a laminated glass.

The thickness dp of the insulation layer 105 in the antenna circuit board 107 can be suitably selected within a wide range of, for example, from 10 $\mu$m to 2.5 mm in accordance with required antenna performance or the like. For example, the thickness may be from about 0.1 to 2.5 mm, preferably from about 0.3 to 2.0 mm, and more preferably from about 0.3 to 1.0 mm. In a case where the antenna circuit board is a multi-layered circuit board, the thickness dp of the insulation layer means a thickness of the whole insulation layer(s) constituting the multi-layered circuit board (or a total thickness of all insulation layers).

In Fig. 1, the low-dielectric layer 103 is adhesive to both the first glass layer 101 and the antenna circuit board 107, and the antenna circuit board 107 is attached to the first glass layer 101 through the low-dielectric layer 103. For this reason, the low-dielectric layer 103 has a surface adhering to the first glass layer 101, and the antenna circuit board 107 has a surface adhering to the low-dielectric layer 103.

The low-dielectric layer 103 may have a desired size with respect to the antenna circuit board 107 depending on an intended use. As shown in Fig. 1, the low-dielectric layer 103 may have a dimension in an in-plane direction equivalent to, smaller than, or larger than a dimension of the antenna circuit board 107. In a case where the low-dielectric layer 103 is larger than the antenna circuit board 107 in the in-plane direction, the antenna circuit board 107 may be embedded in the low-dielectric layer 103. It should be noted that the term "in-plane direction" herein means an in-plane direction which is normal to the thickness direction Z in Fig. 1. The dimensions of the low-dielectric layer and the high-frequency antenna circuit board shall be the same in the embodiments described later.

In a case where the low-dielectric layer 103 is not adhesive, the first glass layer 101, the low-dielectric layer 103, and the antenna circuit board 107 may be disposed adjacent to one another by using an external adhesive element if needed. In such a case, contacting surfaces between the low-dielectric layer 103 and the first glass layer 101 may be preferably in contact with each other without interposition of an air layer. Similarly, contacting surfaces between the low-dielectric layer 103 and the antenna circuit board 107 may be preferably in contact with each other without interposition of an air layer.

With respect to the first glass layer 101, the antenna circuit board 107 may have a desired size depending on an intended use and be arranged in a desired position.

If needed, a protective member (protective layer) for protecting the antenna circuit board 107 may be arranged on a rear side (i.e., an opposite surface to a surface to which the low-dielectric layer 103 is placed adjacent) and/or a side surface of the antenna circuit board 107. For example, as a protective member, a further low-dielectric layer may be disposed, e.g., adjacent to the antenna circuit board 107. Alternatively, as protective members, for example, a further low-dielectric layer and a second glass layer may be arranged adjacent to the antenna circuit board 107 in this order. In the antenna system 100, if it is used on vehicle glass or the like, a sealing material may be provided to at least a part of the edge of the first glass layer 103. The same shall apply to the embodiments described later.

Second Embodiment

Fig. 2 is a schematic cross-sectional view for illustrating a production method of an antenna system according to a second embodiment. As shown in Fig. 2, an antenna system 200 according to the second embodiment comprises a first glass layer 201, a low-dielectric layer 203 having a lower dielectric constant than that of the first glass layer 201, an antenna circuit board 107, and a second glass layer 202 arranged opposite from the first glass layer 201 in the thickness direction Z. The same constituting elements as those of the first embodiment are denoted with the same reference signs, and the description thereof will be omitted. The antenna system 200 may constitute, for example, a multi-layer glass (or laminated glass) including the first glass layer 201 and the second glass layer 202 to be used as a window glass or vehicle glass (windshield glass, side window glass, rear window glass). The antenna circuit board 107 may be arranged between the first glass layer 201 and the second glass layer 202, with the low-dielectric layer 103 interposed therebetween.

In the second embodiment, the antenna circuit board 107 is embedded in the low-dielectric layer 203, and the low-dielectric layer 203 adheres the first glass layer 201 and the second glass layer 202.

The high-frequency waves A have a wavelength $\lambda$ at a predetermined frequency, and the high-frequency waves entering the first glass layer 201 are partly reflected at a predetermined reflectance R without reaching the antenna circuit board 107. The low-dielectric layer 203 has a lower dielectric constant $\varepsilon f$ than a dielectric constant $\varepsilon g$ of the first glass layer 201 so as to reduce the reflectance R, so that a larger proportion of the high-frequency waves A can reach the antenna circuit board 107.

In the antenna system 200, in the thickness direction Z, the first glass layer 201 has a thickness dg, the low-dielectric layer 203 has a thickness df above the antenna circuit board 107, and the insulation layer 105 within the antenna circuit board 107 has a thickness dp. The thickness df of the low-dielectric layer 203 herein is determined as a distance between the first glass layer 201 and the insulation layer 105, instead of a distance between the first glass layer 201 and the second glass layer 202. The thickness da of the whole low-dielectric layer 203 means a thickness of the whole low-dielectric layer and indicates a distance between the first glass layer 201 and the second glass layer 202 in Fig. 2. These shall apply to all embodiments.

The thickness dg of the first glass layer 201 can be suitably set depending on an intended use of an object to which the first glass layer is attached. For example, the thickness may be from about 0.5 to 20 mm (e.g., from 1 to 20 mm), preferably from about 1 to 15 mm (e.g., from 3 to 13 mm), and more preferably from about 1.5 to 10 mm (e.g., from 4 to 10 mm).

The thickness dg' of the second glass layer 202 can also be suitably set depending on an intended use of an object to which the second glass layer 202 is attached. For example, the thickness may be from about 0.5 to 20 mm (e.g., from 1 to 20 mm), preferably from about 1 to 15 mm (e.g., from 3 to 13 mm), and more preferably from about 1.5 to 10 mm (e.g., from 4 to 10 mm).

The antenna circuit board 107 on the first glass layer 201 may have a desired size depending on an intended use and be arranged a desired position.

Third Embodiment

Fig. 3 is a schematic cross-sectional view for illustrating a production method of an antenna system according to a third embodiment. As shown in Fig. 3, the antenna system 300 according to the third embodiment comprises a first glass layer 301, a low-dielectric layer 303 having a lower dielectric constant than that of the first glass layer 301, an antenna circuit board 107, and a second glass layer 302. The same constituting elements as those of the first embodiment are denoted with the same reference signs, and the description thereof will be omitted.

The first glass layer 301 and the low-dielectric layer 303 are disposed so as to have parts adjacent to each other in the thickness direction, and the low-dielectric layer 303 and the antenna circuit board 107 are disposed so as to have parts adjacent to each other in the thickness direction. Further, the antenna circuit board 107 may be attached to the second glass layer 302 by using any of various fixing members. For example, the antenna circuit board 107 may

be attached to the second glass layer 302 through an adhesive layer 308.

In this embodiment, examples of the second glass layer 302 may include a window glass, and the antenna circuit board 107 may be externally arranged on the window glass.

The high-frequency waves A entering the first glass layer 301 are partly reflected at a predetermined reflectance R without reaching the antenna circuit board 107. In the third embodiment, the low-dielectric layer 303 has a lower dielectric constant εf than a dielectric constant εg of the first glass layer 301 so as to reduce the reflectance R, so that a larger proportion of the high-frequency waves A can reach the antenna circuit board 107.

In the antenna system 300, in the thickness direction Z, the first glass layer 301 has a thickness dg, the low-dielectric layer 303 has a thickness df, and the insulation layer 105 within the antenna circuit board 107 has a thickness dp. The thickness df of the low-dielectric layer 303 herein is determined as a distance between the first glass layer 301 and the insulation layer 305, instead of a distance between the first glass layer 301 and the second glass layer 302. In this embodiment, the thickness of the whole low-dielectric layer 303 is the same as the thickness df above the antenna circuit board 107.

The first glass layer 301 may be thin in terms of lightweight, and the thickness dg may be, for example, from about 0.5 to 7 mm, preferably from about 0.7 to 5 mm, and more preferably from about 0.8 to 3 mm.

The thickness dg' of the second glass layer 302 can be suitably set depending on an intended use of an object to which the second glass layer 302 is attached. For example, the thickness may be from about 0.5 to 20 mm (e.g., from 1 to 20 mm), preferably from about 1 to 15 mm (e.g., from 3 to 13 mm), and more preferably from about 1.5 to 10 mm (e.g., from 4 to 10 mm).

In a case where an adhesive layer 308 is provided, the adhesive layer 308 may be any known or conventional adhesive material that is adhesive to an antenna circuit board and a glass as long as such a material can stick the antenna circuit board 107 to the second glass layer. An adhesive material used for the low-dielectric layer may be used as the adhesive layer 308. For the sake of simplicity, the adhesive layer 308 may be a pressure-sensitive adhesive tape such as a double-sided tape.

The antenna circuit board 107 on the second glass layer 302 may have a desired size depending on an intended use and be arranged a desired position.

Fourth Embodiment

Fig. 4 is a schematic cross-sectional view for illustrating a production method of an antenna system according to a fourth embodiment. As shown in Fig. 4, the antenna system 400 according to the fourth embodiment comprises a first glass layer 401, a low-dielectric layer 403 having a lower dielectric constant than that of the first glass layer 401, and an antenna circuit board 107. The same constituting elements as those of the first embodiment are denoted with the same reference signs, and the description thereof will be omitted.

The first glass layer 401 and the low-dielectric layer 403 are disposed so as to have parts adjacent to each other in the thickness direction, and the low-dielectric layer 403 and the antenna circuit board 107 are disposed so as to have parts adjacent to each other in the thickness direction.

In this embodiment, an adherend body 409 may take any of various forms as long as, for example, the antenna circuit board 107 can be fixed thereto. For example, the adherend body may be a wall portion of a building or a side of a vehicle. The adherend body 409 may be a flexible material such as a PEN film, a PET film, and an acrylic film

The high-frequency waves A entering the first glass layer 401 are partly reflected at a predetermined reflectance R without reaching the antenna circuit board 107. In the fourth embodiment, the low-dielectric layer 403 has a lower dielectric constant εf than a dielectric constant εg of the first glass layer 401 so as to reduce the reflectance R, so that a larger proportion of the high-frequency waves A can reach the antenna circuit board 107.

In the antenna system 400, in the thickness direction Z, the first glass layer 401 has a thickness dg, the low-dielectric layer 403 has a thickness df, and the insulation layer 105 within the antenna circuit board 107 has a thickness dp. The thickness df of the low-dielectric layer 403 herein is determined as a distance between the first glass layer 401 and the insulation layer 105. In this embodiment, the thickness of the whole low-dielectric layer 403 is the same as the thickness df above the antenna circuit board 107.

The first glass layer 401 may be thin in terms of lightweight, and the thickness dg may be, for example, from about 0.5 to 7 mm, preferably from about 0.7 to 5 mm, and more preferably from about 0.8 to 3 mm.

Further, the antenna system 400 may be attached to the adherend body 409 by using any of various fixing members. For example, the antenna system 400 may be attached to the adherend body 409 by using fixing members 408a and 408b that laterally surround the antenna system 400. The fixing members 408a and 408b may be separate members or a united member. The fixing members may include a bolt, a bis, a screw, etc.

In addition to the fixing members 408a and 408b, or alternative to the fixing members 408a and 408b, a non-illustrated adhesive layer such as the adhesive layer 308 shown in Fig. 3 may be used to stick the antenna circuit board 107 and the adherend body 409 together.

For example, the adhesive layer may be any known or conventional adhesive material that is adhesive to an antenna circuit board and an adherend body as long as such a material can stick the antenna circuit board 107 to the adherend body 409. For example, for the sake of simplicity, the adhesive layer may be a pressure-sensitive adhesive material such as a double-sided tape.
The antenna circuit board 107 on the adherend body 409 may have a desired size depending on an intended use and be arranged at a desired position.

Fifth Embodiment

Fig. 5 is a schematic cross-sectional view for illustrating an antenna system according to a fifth embodiment. As shown in Fig. 5, the antenna system 500 according to the fifth embodiment comprises a first glass layer 501, a first low-dielectric layer 503a having a lower dielectric constant than that of the first glass layer 501, an antenna circuit board 107, a second low-dielectric layer 503b, and a second glass layer 502 arranged opposite from the first glass layer 501 in the thickness direction Z. The constituting elements in the fifth embodiment same as those in other embodiments are denoted with the same reference signs, and the description thereof will be omitted. The antenna system 500 may include, for example, a laminated glass including the first glass layer 501 and the second glass layer 502 to be used as a window glass. The antenna circuit board 107 may be arranged between the first glass layer 501 and the second glass layer 502, with the first low-dielectric layer 503a and the second low-dielectric layer 503b interposed therebetween.
In the fifth embodiment, the antenna circuit board 107 is embedded at a boundary between the first low-dielectric layer 503a and the second low-dielectric layer 503b, and the first glass layer 501 and the second glass layer 502 are adhered to each other by the first low-dielectric layer 503a and the second low-dielectric layer 503b to form a laminated glass.
The high-frequency waves A have a wavelength $\lambda$ at a predetermined frequency, and the high-frequency waves entering the first glass layer 501 are partly reflected at a predetermined reflectance R without reaching the antenna circuit board 107. The first low-dielectric layer 503a having a lower dielectric constant $\varepsilon f$ than a dielectric constant $\varepsilon g$ of the first glass layer 501 is used so as to reduce the reflectance R, so that a larger proportion of the high-frequency waves A can reach the antenna circuit board 107.
In the antenna system 500, in the thickness direction Z, the first glass layer 501 has a thickness dg, the first low-dielectric layer 503a has a thickness df above the antenna circuit board 107, and the insulation layer 105 within the antenna circuit board 107 has a thickness dp. The thickness df of the first low-dielectric layer 503a above the antenna circuit board 107 is determined as a distance between the first glass layer 501 and the insulation layer 105.
The second low-dielectric layer 503b has a thickness df' below the high-frequency antenna circuit board 107. Since the conductive layer 106 occupies half or more of the in-plane area, the thickness df' of the second low-dielectric layer 503b below the high-frequency antenna circuit board 107 is determined as a distance between the second glass layer 502 and the conductive layer 106. The thickness df' below the antenna circuit board 107 may be a thickness of the low-dielectric layer disposed on an opposite side from the first low-dielectric layer with respect to the antenna circuit board.
Further, the first and second low-dielectric layers are united, and the thickness of the low-dielectric layers as a whole is determined as a thickness da, i.e., a distance between the first glass layer 501 and the second glass layer 502.
The thickness dg of the first glass layer 501 can be suitably set depending on an intended use of an object to which the first glass layer 501 is attached. For example, the thickness may be from about 0.5 to 20 mm, preferably from about 1 to 15 mm, and more preferably from about 1.5 to 10 mm.
The thickness dg' of the second glass layer 502 can also be suitably set depending on an intended use of an object to which the second glass layer 502 is attached. For example, the thickness may be from about 0.5 to 20 mm, preferably from about 1 to 15 mm, and more preferably from about 1.5 to 10 mm.
The thickness df of the first low-dielectric layer 503a and the thickness df' of the second low-dielectric layer 503b may be equal to or different from each other.
The antenna circuit board 107 on the first glass layer 501 may have a desired size depending on an intended use and be arranged a desired position.

Sixth Embodiment

Fig. 6 is a schematic cross-sectional view for illustrating an antenna system according to a sixth embodiment. As shown in Fig. 6, the antenna system 600 according to the sixth embodiment comprises a first glass layer 601, a first low-dielectric layer 603a having a lower dielectric constant than that of the first glass layer 601, an antenna circuit board 107, a second low-dielectric layer 603b, and a second glass layer 602 arranged opposite from the first glass layer 601 in the thickness direction Z. The same constituting elements as those of the fifth embodiment are denoted with the same reference signs, and the description thereof will be omitted. The antenna system 600 may include, for example, a

laminated glass including the first glass layer 601 and the second glass layer 602 to be used as a window glass. The antenna circuit board 107 may be arranged between the first glass layer 601 and the second glass layer 602, with the first low-dielectric layer 603a and the second low-dielectric layer 603b interposed therebetween.

In the sixth embodiment, the antenna circuit board 107 is embedded together with the thin second low-dielectric layer 603b in the thick first low-dielectric layer 603a. The sides of the second low-dielectric layer 603b which are not disposed adjacent to either the antenna circuit board nor the second glass layer are disposed adjacent to the first low-dielectric layer 603a. The first low-dielectric layer 603a and the second low-dielectric layer 603b as a whole form the low-dielectric layer 603, and the first glass layer 601 and the second glass layer 602 are adhered to each other by the low-dielectric layer 603 to form a laminated glass.

The high-frequency waves A have a wavelength $\lambda$ at a predetermined frequency, and the high-frequency waves entering the first glass layer 601 are partly reflected at a predetermined reflectance R without reaching the antenna circuit board 107. The first low-dielectric layer 603a having a lower dielectric constant $\varepsilon f$ than a dielectric constant $\varepsilon g$ of the first glass layer 601 is used so as to reduce the reflectance R, so that a larger proportion of the high-frequency waves A can reach the antenna circuit board 107.

In the antenna system 600, in the thickness direction Z, the first glass layer 601 has a thickness dg, the first low-dielectric layer 603a has a thickness df above the antenna circuit board 107, and the insulation layer 105 within the antenna circuit board 107 has a thickness dp.

In this case, since the circuit part (circuit layer 104) occupies less than half of the in-plane area, the thickness df of the first low-dielectric layer 603a above the antenna circuit board 107 is determined as a distance between the first glass layer 601 and the insulation layer 105.

The second low-dielectric layer 603b has a thickness df' below the antenna circuit board 107. Since the conductive layer 106 occupies half or more of the in-plane area, the thickness df' of the second low-dielectric layer 603b below the antenna circuit board 107 is determined as a distance between the second glass layer 602 and the conductive layer 106.

The thickness dg of the first glass layer 601 can be suitably set depending on an intended use of an object to which the first glass layer 601 is attached. For example, the thickness may be from about 0.5 to 20 mm, preferably from about 1 to 15 mm, and more preferably from about 1.5 to 10 mm.

The thickness dg' of the second glass layer 602 can also be suitably set depending on an intended use of an object to which the second glass layer 602 is attached. For example, the thickness may be from about 0.5 to 20 mm, preferably from about 1 to 15 mm, and more preferably from about 1.5 to 10 mm.

The antenna circuit board 107 and the second low-dielectric layer 603b may be embedded in the first low-dielectric layer 603a. In this case, the thickness df of the first low-dielectric layer 603a above the antenna circuit board 107 may be sufficiently larger than the thickness df' of the second low-dielectric layer 603b.

As for the thickness da of the first and second low-dielectric layer as a whole in Fig. 6, in a case where the first low-dielectric layer 603a has a substantially the same thickness before and after the antenna circuit board 107 and the second low-dielectric layer 603b are embedded therein, the film thickness of the first low-dielectric layer 603a may be used as the thickness da of the first and second low-dielectric layers as a whole.

The antenna circuit board 107 on the first glass layer 601 may have a desired size depending on an intended use and be arranged a desired position.

The present invention further may encompass a laminate comprising an antenna circuit board and a low-dielectric layer disposed adjacent to the antenna circuit board, the laminate being configured to be used for the above-described antenna system or the like.

The laminate of the present invention is only required to comprise an antenna circuit board and a low-dielectric layer disposed adjacent to the antenna circuit board. For example, the laminate may comprise a first low-dielectric layer and an antenna circuit board arranged in this order, or may comprise a first low-dielectric layer, an antenna circuit board, and a second low-dielectric layer arranged in this order. The laminate may further comprise a third layer such as a protective layer on these layers.

The laminate may be combined with an adherend body such as glass to form an antenna system. For example, such a laminate may constitute a part of any of the antenna systems described in the above first to sixth embodiments.

Hereinafter, each of the constituting members will be described. The following description, however, merely provides examples, and the present invention may encompass various aspects as long as the effect of the present invention can be achieved.

First and Second Glass Layers

The shape of the first and second glass layers is not limited to specific one as long as they can transmit high-frequency waves and allow the high-frequency waves to reach the antenna circuit board through the low-dielectric layer. For example, each of the first and second glass layers may be a glass sheet having, e.g., a flat shape, a curved shape, etc.

The material of the first and second glass layers is not limited to specific one as long as the material is commonly used for a window glass and the like, and may be any of various light-transmissive, transparent or translucent organic glass members (e.g., acrylic members, polycarbonate members, etc.). In terms of weather resistance and transparency, a preferable material includes an inorganic glass member made of a soda-lime glass, a borate glass, a borosilicate glass, an aluminosilicate glass, a quartz glass, etc. Based on the classification according to alkaline component(s), a non-alkaline glass and a low-alkaline glass may be mentioned. The above glass member may contain an alkali metal component(s) (e.g., $Na_2O$, $K_2O$, $Li_2O$) at a proportion of preferably 15 wt% or lower, and more preferably 10 wt% or lower.

An arbitrary and suitable method may be used to shape these glass layers according to the shape and material of glass. Typically, the above glass member is produced by melting a mixture containing a main raw material(s) (e.g., silica and alumina), a defoaming agent (e.g., sodium sulfate, antimony oxide), and a reducing agent (e.g., carbon) at a temperature of 1400°C to 1600°C and shaping the melt to a sheet form, followed by cooling. Examples of methods for forming thin plates of the glass member may include a slot down draw method, a fusion method, and a float method. If necessary, the glass formed to a predetermined shape such as a sheet shape by such a method may be thinned or may be subjected to antiglare treatment or the like so as to have an uneven surface. Further, in order to improve smoothness or the like, the glass may be chemically polished with a solvent such as hydrofluoric acid.

Each of the first and second glass layers may include, for example, a window glass for vehicles (e.g., a vehicle window glass such as for automobiles, railroad cars, airplanes, and ships), or a window glass for buildings.

A first glass layer may be combined with a second glass layer, and an antenna circuit board may be arranged between these layers. The second glass layer is generally a glass member arranged opposite from the first glass layer in the thickness direction, and the second glass layer may be made of a same or different material as/from that of the first glass layer.

The first and second glass layers may have colored regions, and the antenna circuit within the antenna circuit board may be arranged in the colored regions. The first and/or second glass layers may have such colored regions in parts (e.g., at end portion regions), especially in a case where visibility is required for applications such as a window glass or a vehicle glass.

Low-dielectric layer

The low-dielectric layer has a lower dielectric constant than that of the first glass layer and plays a role in allowing incident high-frequency waves into the first glass layer to reach the antenna circuit board. The low-dielectric layer has a lower dielectric constant than that of the first glass layer at a same frequency.

Preferably, the dielectric constant εf of the low-dielectric layer may fall within a range defined by the following formula (I) with respect to the dielectric constant εg of the first glass layer.

Math 1

$$\sqrt{\varepsilon g} - 1.0 \leqq \varepsilon f \leqq \sqrt{\varepsilon g} + 1.0 \qquad (I)$$

As a specific value, for example, expressed with respect to the dielectric constant eg of the first glass layer, the dielectric constant εf of the low-dielectric layer may be, for example, from (εg - 5) to (εg - 0.1), preferably from (εg - 4.5) to (εg - 0.5), and more preferably from (εg - 4) to (εg - 1.5) at a frequency of 28 GHz.

The dielectric characteristics (dielectric constant and dielectric loss tangent) can be measured using a Fabry-Perot resonator (Model No. DPS03) manufactured by KEYCOM Corporation, at 28 GHz (25°C) in accordance with JIS R 1660-2. This measurement method makes it possible to measure the dielectric characteristics with extremely high precision in both of a first direction and a second direction orthogonal to the first direction on a plane (X-Y direction), and makes it possible to perform highly precise measurement even on an object having a low tanδ.

In one embodiment, for example, at a frequency of 28 GHz, the first glass layer may have a dielectric constant εg of from 5.5 to 7.5, preferably from 5.8 to 7.3, and more preferably from 6.0 to 7.0, and the low-dielectric layer may have a dielectric constant εf of, for example, from 2.0 to 4.0, preferably from 2.2 to 3.5, and more preferably from 2.4 to 3.0.

In one embodiment, for example, at a frequency of 28 GHz, the first glass layer may have a dielectric loss tangent tanδg of 0.05 or lower, preferably 0.03 or lower, and more preferably 0.02 or lower, and the low-dielectric layer may have a dielectric loss tangent tanδf of, for example, 0.05 or lower, preferably 0.03 or lower, and more preferably 0.01 or lower.

In one embodiment, the low-dielectric layer may have a thickness (df; unit: mm) of from (λ/4 × n - 0.050) to (λ/4 × n + 0.050), preferably from (λ/4 × n - 0.030) to (λ/4 × n + 0.030), more preferably from (λ/4 × n - 0.025) to (λ/4 × n + 0.025), and particularly preferably from (λ/4 × n - 0.010) to (λ/4 × n + 0.010) with respect to the wavelength λ

(range: from 1 to 100 mm) of the high-frequency waves, where n is an integer (e.g., an integer of from 1 to 10).

In one embodiment, the thickness (df; unit: mm) of the low-dielectric layer can be suitably changed according to the wavelength (λ) of the high-frequency waves and the dielectric constant εf of the low-dielectric layer and may preferably fall within a range satisfying one of the following formulae (II) to (II"), where n is an integer (e.g., an integer of from 1 to 10).

Math 2

$$\frac{\lambda}{\sqrt{\varepsilon f}} \times n - 0.050 \leqq d f \leqq \frac{\lambda}{\sqrt{\varepsilon f}} \times n + 0.050 \qquad (II)$$

More preferably, the thickness may fall within a range satisfying the following formula (II'):

Math 3

$$\frac{\lambda}{\sqrt{\varepsilon f}} \times n - 0.030 \leqq d f \leqq \frac{\lambda}{\sqrt{\varepsilon f}} \times n + 0.030 \qquad (II')$$

More preferably, the thickness may fall within a range satisfying the following formula (II"):

Math 4

$$\frac{\lambda}{\sqrt{\varepsilon f}} \times n - 0.0250 \leqq d f \leqq \frac{\lambda}{\sqrt{\varepsilon f}} \times n + 0.025 \qquad (II'')$$

In one embodiment, the thickness (df; unit: mm) of the low-dielectric layer above the antenna circuit board can be suitably changed according to the wavelength (λ) of the high-frequency waves and the dielectric constant of the low-dielectric layer and may preferably fall within a range satisfying one of the following formulae (III) to (III"), where n is an integer (e.g., an integer of from 1 to 10). Math 5

$$\frac{\lambda}{4 \cdot \varepsilon f} \times n - 0.050 \leqq d f \leqq \frac{\lambda}{4 \cdot \varepsilon f} \times n + 0.050 \qquad (III)$$

More preferably, the thickness may fall within a range satisfying the following formula (III'):

Math 6

$$\frac{\lambda}{4 \cdot \varepsilon f} \times n - 0.030 \leqq d f \leqq \frac{\lambda}{4 \cdot \varepsilon f} \times n + 0.030 \qquad (III')$$

More preferably, the thickness may fall within a range satisfying the following formula (III"):

Math 7

$$\frac{\lambda}{4 \cdot \varepsilon f} \times n - 0.025 \leqq d f \leqq \frac{\lambda}{4 \cdot \varepsilon f} \times n + 0.025 \qquad (III'')$$

In one embodiment, the thickness df of the low-dielectric layer can be selected from a wide range of from about

1 μm to 20.0 mm. In terms of reflectance suppression, the thickness may be, for example, from about 0.1 mm to 20.0 mm, preferably from about 0.1 mm to 10.0 mm, and more preferably from about 0.15 mm to 2.0 mm.

The low-dielectric layer may have a thickness df large enough to be thick in a case where the low-dielectric layer is used for the laminated glass. In such a case, the thickness df of the low-dielectric layer may be, for example, above 0.37 mm, preferably 0.50 mm or larger, and further preferably 0.75 mm or larger and be preferably 2.5 mm or smaller, more preferably 2.28 mm or smaller, further preferably 1.6 mm or smaller, and still further preferably 0.85 mm or smaller.

Depending on an intended use, the low-dielectric layer may be thin. For instance, the thickness df of the low-dielectric layer may be, for example, 370 μm or smaller, more preferably 300 μm or smaller, further preferably 200 μm or smaller, still further preferably 100 μm or smaller, particularly preferably 60 μm or smaller, particularly more preferably less than 50 μm, particularly further preferably 45μm or smaller, and most preferably 40 μm or smaller. The thickness may be preferably 1 μm or larger, more preferably 5 μm or larger, further preferably 10 μm or larger, and still further preferably 20 μm or larger.

Where the first low-dielectric layer and the second low-dielectric layer are adjacent to the opposite sides of the antenna circuit board, respectively, the thickness df of the first low-dielectric layer and the thickness df' of the second low-dielectric layer may both be large, or may both be small, or one of them may be large and the other may be small.

In one embodiment, where the first low-dielectric layer and the second low-dielectric layer are adjacent to the opposite sides of the antenna circuit board, the respective low-dielectric layers may be the same or different in thickness and size in the in-plane direction depending on the configuration or intended use of the antenna system. Where one of the low-dielectric layers is extremely thinner than the other, for example, a thickness ratio (df/df', where df>df') of a thick low-dielectric layer to a thin low-dielectric layer may be from 3/1 to 30/1, and preferably from 4/1 to 20/1. Such a thickness ratio of the low-dielectric layers makes it possible to, for example, produce a laminated glass in which an antenna circuit board is arranged in the thick low-dielectric layer without undercutting a laminated-glass intermediate film for filling a level difference or without using a spacer for filling a level difference.

The thickness da of the low-dielectric layer(s) as a whole can be suitably set depending on an intended use and/or according to the thickness of the circuit board. For example, where the first and second low-dielectric layers are united, the thickness da may be from about 0.1 to 40 mm, preferably from about 0.5 to 30 mm, and more preferably from about 1.0 to 25 mm.

The low-dielectric layer is not limited to a specific one as long as it has a predetermined dielectric constant and can be disposed adjacent to the first glass layer. For example, the low-dielectric layer may be made of a thermoplastic resin or a thermosetting resin having a predetermined dielectric constant. The term "adjacent to" means that the layer is in contact with a neighboring surface of a target object or is so close to maintain an equivalent incidence rate of high-frequency waves to that in the case of the contact (e.g., in a range of ± 10% of the incidence rate in the case of contact).

The low-dielectric layer itself may be preferably an adhesive low-dielectric layer having an adhesive property in that such a layer can easily provide adhesion at an interface between the first glass layer and the low-dielectric layer as well as an interface between the low-dielectric layer and the antenna circuit board. The low-dielectric layer may be adhesive to the first glass layer, be adhesive to the antenna circuit board, and preferably may be adhesive to both of them.

Where the low-dielectric layer is thermally fusible, the low-dielectric layer material may be melted to adhere the antenna circuit board to the first glass through the low-dielectric layer material. Alternatively, where a solution of a low-dielectric layer material dissolved in a solvent has an adhesive property, the solution of the low-dielectric layer material may be applied to an adhering surface(s) of the first glass and/or the antenna circuit board to adhere the antenna circuit board to the first glass through the low-dielectric layer material.

The fusion or adhesion (hereinafter, referred to as fusion and the like) may be preferably performed in a degassed condition and/or under reduced pressure in order to prevent incorporation of air. Deaeration may be performed by physically forcing out the air from the adhesion interface.

As for fusion and the like, the antenna circuit board may be positioned by preliminary fusion and the like before the antenna circuit board and the first glass are joined by fusion and the like in a degassed condition and/or under reduced pressure.

The adhesive low-dielectric layer may be made of, for example, a material having good compatibility with a glass material such as a polyvinyl acetal resin, an olefin-vinyl carboxylate copolymer resin, an ionomer resin, and an acrylic resin. An adhesive low-dielectric layer that can be adhered by thermo-compression bonding makes it possible to suppress breakage and/or deformation of a circuit during the bonding and can follow a glass base member to suppress generation of air bubbles and/or detachment of the layer, even if the glass base member is a curved glass such as a vehicle windshield glass. Further, where the antenna system is constructed as a laminated glass in which the high-frequency antenna circuit board is embedded between glass base members, the antenna system can be laminated in general production conditions for laminated glass, so that additional steps can be omitted.

Polyvinyl Acetal Resin

Examples of the polyvinyl acetal resin may include a polyvinyl acetal resin produced by acetalizing a vinyl alcohol resin such as a polyvinyl alcohol and a vinyl alcohol copolymer.

Where the low-dielectric layer contains a polyvinyl acetal resin, the layer may contain one polyvinyl acetal resin or two or more polyvinyl acetal resins which are different in at least one of viscosity-average polymerization degree, acetalization degree, amount of acetyl groups, amount of hydroxyl groups, ethylene content, molecular weight of an aldehyde used in acetalization, and chain length. Where two or more different polyvinyl acetal resins are used as the polyvinyl acetal resin, the resin mixture preferably contains two or more polyvinyl acetal resins which are different in at least one or more of viscosity-average polymerization degree, acetalization degree, amount of acetyl groups, and amount of hydroxyl groups in terms of ease of melt-processing and the like.

A polyvinyl acetal resin used in the present invention can be obtained by a known or conventional method. For example, an aldehyde (or a keto compound) and an acid catalyst are added to an aqueous solution of a polyvinyl alcohol or a vinyl alcohol copolymer to carry out an acetalization reaction. Next, the reaction mixture is filtered if necessary, and then a neutralizing agent such as an alkali is added to neutralize the reaction mixture. Thereafter, the resin is filtered, cleaned with water and dried to obtain a polyvinyl acetal resin.

A polyvinyl alcohol can be obtained by saponifying a polyvinyl ester obtained by polymerizing a vinyl ester compound, and a vinyl alcohol copolymer can be obtained by saponifying a copolymer of a vinyl ester compound and other monomer(s).

Examples of the vinyl ester compound may include: aliphatic vinyl carboxylate such as vinyl acetate, 1-propenyl acetate, 1-methylvinyl acetate, 1-butenyl acetate, 2-methyl-1-propenyl acetate, vinyl propionate, vinyl butanoate, vinyl pivalate, vinyl versatate, vinyl pentanoate, vinyl hexanoate, vinyl octanoate, vinyl decanoate, vinyl dodecanoate, vinyl hexadecanoate, and vinyl octadecenoate; aromatic vinyl carboxylate such as vinyl benzoate; and other vinyl ester compounds. These vinyl ester compounds can be used alone or in combination. Of these vinyl ester compounds, vinyl acetate is preferable in terms of productivity.

Examples of the other monomer(s) may include $\alpha$-olefins such as ethylene, propylene, n-butene, isobutylene; acrylic acids and salts thereof; acrylic acid esters such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate, octadecyl acrylate; methacrylic acids and salts thereof; methacrylic acid esters such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate, octadecyl methacrylate; acrylamides; acrylamide derivatives such as N-methylacrylamide, N-ethylacrylamide, N, N-dimethylacrylamide, diacetoneacrylamide, acrylamidepropanesulfonic acids and salts thereof, acrylamidepropyldimethylamines and salts thereof or quaternary salts thereof, N-methylolacrylamides and derivatives thereof; methacrylamide derivatives such as methacrylamide, N-methylmethacrylamide, N-ethylmethacrylamide, methacrylamidepropanesulfonic acids and salts thereof, methacrylamidepropyldimethylamines and salts thereof or quaternary salts thereof, N-methylolmethacrylamides and derivatives thereof; vinyl ethers such as methyl vinyl ether, ethyl vinyl ether, n-propyl vinyl ether, i-propyl vinyl ether, n-butyl vinyl ether, i-butyl vinyl ether, t-butyl vinyl ether, dodecyl vinyl ether, stearyl vinyl ether; nitriles such as acrylonitrile and methacrylonitrile; vinyl halides such as vinyl chloride and vinyl fluoride; vinylidene halides such as vinylidene chloride and vinylidene fluoride; allyl compounds such as allyl acetate and allyl chloride; unsaturated dicarboxylic acids such as maleic acid, itaconic acid, and fumaric acid, salts of such unsaturated dicarboxylic acids, esters of such unsaturated dicarboxylic acids or anhydrides of such unsaturated dicarboxylic acids; vinylsilyl compounds such as vinyltrimethoxysilane; and other comonomers. The other monomers can be used alone or in combination of two or more. Of these, the other monomer is preferably ethylene.

The acid catalyst used for the acetalization reaction is not limited to a specific one and may be either an organic acid or an inorganic acid. Examples thereof may include: acetic acid, para-toluenesulfonic acid, nitric acid, sulfuric acid, and hydrochloric acid. Of these, hydrochloric acid, sulfuric acid, and nitric acid are preferable in terms of acid strength and ease of removal when cleaning.

The aldehyde (or keto compound) used in the production of the polyvinyl acetal resin may preferably have a linear, or branched, or cyclic structure having 1 to 10 carbon atoms, and more preferably have a linear or branched structure. This gives a corresponding linear or branched acetal side chain. Further, the polyvinyl acetal resin used in the present invention may be obtained by acetalizing a polyvinyl alcohol or a vinyl alcohol copolymer with a mixture of a plurality of aldehydes (or keto compounds). Either the polyvinyl alcohol or the vinyl alcohol copolymer may be used singly, or a mixture of a polyvinyl alcohol and a vinyl alcohol copolymer may be used.

Examples of the aldehyde may include: aliphatic, aromatic, alicyclic aldehydes such as formaldehyde, acetaldehyde, propionaldehyde, n-butylaldehyde, isobutylaldehyde, valeraldehyde, isovaleraldehyde, n-hexylaldehyde, 2-ethylbutylaldehyde, n-heptylaldehyde, n-octylaldehyde, 2-ethylhexylaldehyde, n-nonylaldehyde, n-decylaldehyde, benzaldehyde, and cinnamaldehyde. Of these, aliphatic non-branched aldehydes having 2 to 6 carbon atoms are preferable, and n-butyraldehyde is particularly preferable in that a polyvinyl acetal resin having a suitable breaking energy can be

easily obtained. These aldehydes can be used alone or in combination of two or more. Further, a polyfunctional aldehyde or an aldehyde having other functional group may be used in combination in a range of 20% by mass or less based on the total aldehyde. Where n-butyraldehyde is used, the content of n-butyraldehyde based on the aldehyde used for acetalization may be preferably 50% by mass or more, more preferably 80% by mass or more, further preferably 95% by mass or more, particularly preferably 99% by mass or more, and even 100% by mass.

A polyvinyl alcohol used as a raw material of the polyvinyl acetal resin may have a viscosity-average polymerization degree of preferably 100 or higher, more preferably 300 or higher, further preferably 400 or higher, further preferably 600 or higher, particularly preferably 700 or higher, and most preferably 750 or higher. Where a polyvinyl acetal resin composition containing a relatively large amount (e.g., 20 parts by mass or more) of a plasticizer is used, the polyvinyl alcohol used as the raw material of the polyvinyl acetal resin may have a viscosity-average polymerization degree of preferably 500 or higher, more preferably 900 or higher, more preferably 1000 or higher, further preferably 1200 or higher, particularly preferably 1500 or higher, and most preferably 1600 or higher.

In addition, the viscosity-average polymerization degree of the polyvinyl alcohol may be preferably 5000 or lower, more preferably 3000 or lower, further preferably 2500 or lower, particularly preferably 2300 or lower, and most preferably 2000 or lower.

The viscosity-average polymerization degree of the polyvinyl alcohol can be measured, for example, in accordance with JIS K 6726 "polyvinyl alcohol test method."

Since the viscosity-average polymerization degree of the polyvinyl acetal resin typically corresponds to the viscosity-average polymerization degree of the polyvinyl alcohol used as the raw material, the above preferable viscosity-average polymerization degree of the polyvinyl alcohol corresponds to the preferable viscosity-average polymerization degree of the polyvinyl acetal resin. Where the low-dielectric layer contains two or more different polyvinyl acetal resins, at least one polyvinyl acetal resin preferably has a viscosity-average polymerization degree equal to or higher than the lower limit and equal to or lower than the upper limit.

The amount of acetyl groups in the polyvinyl acetal resin constituting the low-dielectric layer may be preferably from 0.01 to 20% by mass, more preferably from 0.05 to 10% by mass, and further preferably from 0.1 to 5% by mass based on the ethylene units in the polyvinyl acetal main chain. The amount of acetyl groups in the polyvinyl acetal resin can be adjusted by appropriately adjusting the saponification degree of the polyvinyl alcohol or the vinyl alcohol copolymer as the raw material. Where the low-dielectric layer contains two or more different polyvinyl acetal resins, at least one of the polyvinyl acetal resins preferably has an amount of acetyl groups within the above range.

The acetalization degree of the polyvinyl acetal resin used in the present invention is not limited to a specific value and may be preferably from 40 to 86 mol%, more preferably from 45 to 82 mol%, further preferably from 50 to 78 mol%, particularly preferably from 60 to 74 mol%, and most preferably from 68 to 74 mol%. The acetalization degree of the polyvinyl acetal resin can be adjusted within the above range by appropriately adjusting the amount of aldehyde used in acetalizing the polyvinyl alcohol resin. Where the acetalization degree is within the above range, compatibility between the polyvinyl acetal resin and the plasticizer is unlikely to be deteriorated. Where the low-dielectric layer contains two or more different polyvinyl acetal resins, at least one of the polyvinyl acetal resins preferably has an acetalization degree within the above range.

The amount of hydroxyl groups in the polyvinyl acetal resin may be preferably from 6 to 26% by mass, more preferably from 12 to 24% by mass, more preferably from 15 to 22% by mass, and particularly preferably from 18 to 21% by mass based on the ethylene units in the polyvinyl acetal main chain. The amount of hydroxyl groups can be adjusted within the above range by adjusting the amount of aldehyde used in acetalizing the polyvinyl alcohol resin. Where the low-dielectric layer contains two or more different polyvinyl acetal resins, at least one of the polyvinyl acetal resins preferably has an amount of hydroxyl groups within the above range.

The polyvinyl acetal resin is usually constituted by acetal group units, hydroxyl group units and acetyl group units, and the amount of each of these units can be measured by, for example, JIS K 6728 "polyvinyl butyral test method" or nuclear magnetic resonance (NMR). Where the polyvinyl acetal resin contains other units than the acetal group units, for example, a unit quantity of hydroxyl groups and a unit quantity of acetyl groups can be measured, followed by to subtract these unit quantities from a unit quantity of acetal groups in a case where the resin does not contain other units than the acetal group units, so that the acetal groups can be calculated as a remaining unit quantity.

Although the low-dielectric layer may preferably contain an uncrosslinked polyvinyl acetal in view of facilitation in good film-forming properties, it is possible for the low-dielectric layer to contain a crosslinked polyvinyl acetal. For example, as a method for crosslinking, a polyvinyl acetal may be crosslinked by thermal self-crosslinking with a carboxyl group-containing polyvinyl acetal or intermolecular crosslinking with a polyaldehyde, a glyoxylic acid, etc.

The viscosity of the polyvinyl acetal resin can be suitably set depending on the type of the resin used. For example, where the low-dielectric layer is formed as a thin layer from a polyvinyl acetal resin, a solution of the polyvinyl acetal resin in toluene/ethanol at a ratio of 1/1 (mass ratio) and a concentration of 10% by mass may have a viscosity of from 100 to 1000 mPa·s, preferably from 120 to 800 mPa·s, more preferably from 150 to 600 mPa·s, further preferably from 180 to 500 mPa·s, and particularly preferably from 200 to 400 mPa · s, the viscosity being measured using a

Brookfield (B type) viscometer at 20°C and 30 rpm. Use of a polyvinyl acetal resin having a viscosity within the above range makes it easier to adjust a heating temperature or a heating time within a desired range in thermo-compression bonding for adhesion to a glass base member and to suppress remains of unmolten portions in the polyvinyl acetal resin. Further, such a resin can suppress displacement of the antenna circuit board even if the antenna system is exposed to a high temperature. A polyvinyl acetal resin produced from a polyvinyl alcohol resin having a high or low viscosity-average polymerization degree as a raw material or a part of the raw material may be used or be combinedly used to adjust the viscosity of the polyvinyl acetal resin. Where a mixture of a plurality of polyvinyl acetal resins is used to form the low-dielectric layer, the viscosity is a viscosity of the mixture.

Further, the polyvinyl acetal resin may be combined with a known or commonly used plasticizer, as needed. Examples of such a plasticizer may include the following plasticizers. These plasticizers may be used alone or in combination of two or more. For example, the low-dielectric layer may be formed as a plasticized polyvinyl acetal resin composition including a plasticizer and a polyvinyl acetal resin.

For example, examples of plasticizers may include following plasticizers.

- As esters of polyvalent aliphatic or aromatic acids, there may be exemplified dialkyl adipates (e.g., dihexyl adipate, di-2-ethylbutyl adipate, dioctyl adipate, di-2-ethylhexyl adipate, hexylcyclohexyl adipate, mixture of heptyl adipate and nonyl adipate, diisononyl adipate, heptylnonyl adipate); esters of adipic acid and an alicyclic ester alcohol or an alcohol containing an ether compound (e.g., di(butoxyethyl)adipate, di(butoxyethoxyethyl)adipate); dialkyl sebacates (e.g. dibutyl sebacate); esters of sebacic acid and an alicyclic alcohol or an alcohol containing an ether compound; esters of phthalic acid (e.g., butyl benzyl phthalate, bis-2-butoxyethyl phthalate); and esters of an alicyclic polyvalent carboxylic acid and an aliphatic alcohol (e.g., 1,2-cyclohexanedicarboxylic acid diisononyl ester).
- As esters or ethers of polyvalent aliphatic or aromatic alcohols or oligoether glycols having one or more aliphatic or aromatic substituents, there may be exemplified esters of glycerin, diglycol, triglycol, tetraglycol, or the like, and linear or branched, aliphatic or alicyclic carboxylic acids. Specific examples may include diethylene glycol bis(2-ethylhexanoate), triethylene glycol bis(2-ethylhexanoate), triethylene glycol bis(2-ethylbutanoate), tetraethylene glycol bis(n-heptanoate), triethylene glycol bis(n-heptanoate), triethylene glycol bis(n-hexanoate), tetraethylene glycol dimethyl ether, and dipropylene glycol benzoate.
- As phosphoric acid esters of aliphatic or aromatic ester alcohols, there may be exemplified tris(2-ethylhexyl)phosphate (TOF), triethyl phosphate, diphenyl-2-ethylhexyl phosphate, and tricresyl phosphate.
- There may be also exemplified esters of citric acid, succinic acid and/or fumaric acid.

As a plasticizer, there may be further mentioned: polyesters or oligoesters of polyhydric alcohols and polyvalent carboxylic acids, terminal esterified or etherified products thereof, polyesters or oligoesters of lactone or hydroxycarboxylic acids, terminal esterified or etherified products thereof, etc.

The content of the plasticizer may be, for example, from 0 to 40% by mass, preferably from 0 to 30% by mass, more preferably from 0 to 15% by mass, further preferably from 0 to 10% by mass, and still further preferably from 0 to 5% by mass based on the total amount of the polyvinyl acetal resin and the plasticizer.

Preferable polyvinyl acetal resins may include, for example, "Mowital" (trademark) commercially available from Kuraray Co., Ltd. Preferable polyvinyl acetal resin films may include, for example, "Trosifol" (trademark) commercially available from Kuraray Co., Ltd.

Alternatively, where the low-dielectric layer comprising a polyvinyl acetal resin is adhered to an adherend body, a film made of the polyvinyl acetal resin may be used in combination of a plasticizer to be further applied to, so that the adhesive property of the polyvinyl acetal resin is enhanced by the plasticizer. As such a plasticizer, the above-mentioned plasticizers may be used. From the viewpoint to enhance the adhesive property of the low-dielectric layer, preferred plasticizer may include triethylene glycol bis(2-ethylbutanoate), triethylene glycol bis(2-ethylhexanoate), dihexyl adipate, dibutyl sebacate, di(butoxyethyl) adipate, and di(butoxyethoxyethyl) adipate. More preferred are triethylene glycol bis(2-ethylhexanoate), di(butoxyethyl) adipate, and di(butoxyethoxyethyl) adipate. Particularly preferred are di(butoxyethyl) adipate and di(butoxyethoxyethyl) adipate.

Olefin-Vinyl Carboxylate Copolymer Resin

The olefin-vinyl carboxylate copolymer resin is not limited to a specific one as long as the resin has a lower dielectric constant than that of the first glass layer. Examples of the olefin may include: ethylene, propylene, and n-butene, isobutylene, butadiene, isoprene, and other olefins, and examples of the vinyl carboxylate may include vinyl ester compounds as exemplified in the section of polyvinyl acetal resin. Of these, an ethylene-vinyl acetate copolymer resin which contains ethylene as an olefin and vinyl acetate as a vinyl carboxylate compound is preferable because the resin can have a controlled dielectric constant as well as a good adhesive property.

The olefin-vinyl carboxylate copolymer resin may be further copolymerized with a monomer as a third component

as long as the dielectric constant of the resin can be controlled within a predetermined range. Examples of the monomer as the third component may include: acrylic acid esters, methacrylic acid esters, acrylamides and derivatives thereof, methacrylamides and derivatives thereof, vinyl ethers, nitriles, vinyl halides, vinylidene halides, allyl compounds, unsaturated carboxylic acids and derivatives thereof, and vinylsilyl compounds, all as exemplified in the section of polyvinyl acetal resin. These monomers can be used alone or in combination of two or more. Where these other monomers are copolymerized, in general, these other monomers are preferably used in a proportion of less than 10 mol% based on the vinyl carboxylate compound.

In the olefin-vinyl carboxylate copolymer resin, in terms of strength, a proportion of the vinyl carboxylate units based on the sum of the olefin units and vinyl carboxylate units may be, for example, preferably less than 50 mol%, more preferably 30 mol% or less, further preferably 20 mol% or less, and particularly preferably 15 mol% or less. The lower limit of vinyl carboxylate is not specifically restricted and may be, for example, about 5 mol%.

A preferable olefin-vinyl carboxylate copolymer resin may include, for example, an ethylene-vinyl acetate commercially available from Tosoh Corporation under the name of "Mersen" (trademark).

Ionomer Resin

The ionomer resin is not limited to a specific one and may be a thermoplastic resin including a structural unit derived from an olefin such as ethylene and a structural unit derived from $\alpha,\beta$-unsaturated carboxylic acid, in which the $\alpha,\beta$-unsaturated carboxylic acid is at least partially neutralized with a metal ion. Examples of the metal ion may include: an alkali metal ion such as sodium ion; an alkaline earth metal ion such as magnesium ion; a zinc ion; and other metal ions.

In the ethylene-a,p-unsaturated carboxylic acid copolymer before neutralization by a metal ion, the content of the structural unit of $\alpha,\beta$-unsaturated carboxylic acid may be preferably 2% by mass or more, and more preferably 5% by mass or more based on the mass of the ethylene-$\alpha,\beta$-unsaturated carboxylic acid copolymer. The content of the structural unit of the $\alpha,\beta$-unsaturated carboxylic acid may be preferably 30% by mass or less, and more preferably 20% by mass or less.

Examples of the structural unit derived from the $\alpha,\beta$-unsaturated carboxylic acid in the ionomer resin may include: structural units derived from acrylic acid, methacrylic acid, maleic acid, monomethyl maleate, monoethyl maleate, maleic anhydride. Of these, a structural unit derived from acrylic acid or methacrylic acid is particularly preferable.

As the ionomer resin, in terms of availability, more preferred are an ionomer of an ethylene-acrylic acid copolymer and an ionomer of an ethylene-methacrylic acid copolymer, and particularly preferred are a zinc ionomer of an ethylene-acrylic acid copolymer, a sodium ionomer of an ethylene-acrylic acid copolymer, a zinc ionomer of an ethylene-methacrylic acid copolymer, and a sodium ionomer of an ethylene-methacrylic acid copolymer. The ionomer resins can be used alone or in combination of two or more.

A preferable ionomer resin film may include, for example, "SentryGlas" (trademark) commercially available from Kuraray Co., Ltd.

Acrylic Resin

The acrylic resin may be preferably a polymer obtained from an acrylic acid ester monomer and/or a methacrylic acid ester monomer. Examples of the monomer may include: alkyl acrylates such as methyl acrylate, ethyl acrylate, and n-propyl acrylate; modified acrylates such as glycidyl acrylate and 2-hydroxyethyl acrylate; polyfunctional acrylates such as ethylene glycol diacrylate, polyethylene glycol diacrylate, polypropylene glycol diacrylate, neopentyl glycol diacrylate, pentaerythritol triacrylate; alkyl methacrylates such as methyl methacrylate, ethyl methacrylate, n-propyl methacrylate; modified methacrylates such as glycidyl methacrylate and 2-hydroxyethyl methacrylate; polyfunctional methacrylates such as ethylene glycol dimethacrylate, polyethylene glycol dimethacrylate, polypropylene glycol dimethacrylate, neopentyl glycol dimethacrylate, pentaerythritol trimethacrylate. These monomers can be used alone or in combination of two or more.

The following copolymers may be suitably used as the acrylic resin: a copolymer of an acrylic and/or methacrylic acid ester monomer and other monomer such as an unsaturated carboxylic acid (e.g., acrylic acid and methacrylic acid); an acrylamide (e.g., N,N-dimethylacrylamide); and an aromatic vinyl compound (e.g., styrene, $\alpha$-methylstyrene).

A preferable acrylic resin is a liquid injection type resin commercially available from Shinko Glass Industry Co., Ltd., under the name of "3S resin."

The low-dielectric layer may contain a known or conventional additive as needed. Examples of additives may include: solvents, plasticizers, UV absorbers, antioxidants, adhesion modifiers, whitening agents or optical brighteners, stabilizers, dyes, processing aids, organic or inorganic nanoparticles, sintered silicate, and surfactants. The additives can be used alone or in combination of two or more.

Antenna Circuit Board

The antenna circuit board comprises at least one circuit layer and at least one high-frequency insulation layer. The antenna circuit board is not limited to a specific form and can be used as various high-frequency circuit boards by using a known or conventional technique.
The present invention also encompasses such an antenna circuit board, and the antenna circuit board according to the present invention can be advantageously used in the antenna system of the present invention thanks to the high-frequency characteristics owing to the high-frequency insulation layer.
The circuit layer may be made of, for example, at least a conductive metal and include a circuit formed by a known circuit processing method. A conductor constituting the circuit layer may be various conductive metals such as gold, silver, copper, iron, nickel, aluminum, or alloy metals thereof.
Besides the circuit layer, the antenna circuit board may also include a conductor layer such as a ground layer. The conductor layer may be made of various conductive metals such as gold, silver, copper, iron, nickel, aluminum, or alloy metals thereof. The circuit layer and the conductor layer may be made of a same conductor or different conductors.
The antenna circuit board may be used for various transmission lines (for example, known or conventional transmission lines, such as coaxial lines, strip lines, microstrip lines, coplanar lines, parallel lines), and for antennas (for example, microwave or millimeter-wave antennas). The circuit board may also be used for an antenna device in which an antenna and a transmission line are united.
As long as the high-frequency insulation layer is used, the antenna may have a known or conventional structure (for example, antennas for millimeter waves and antennas for microwaves, such as waveguide slot antennas, horn antennas, lens antennas, chip antennas, patterned antennas, printed antennas, triplate antennas, microstrip antennas, patch antennas). The antenna circuit board (or semiconductor element-mounting board) may be used for various sensors, in particular, vehicle radars.
The antenna circuit board may be a multi-layered circuit board including a plurality of circuit layers and/or conductor layers. The antenna circuit board may be a circuit board (or semiconductor element-mounting board) including a semiconductor element (e.g., IC chip) mounted thereon.
The high-frequency antenna circuit board may be adapted for data transmission at a speed of 10 Gbit/s or higher. For example, the high-frequency antenna circuit board may be a 5G-ready circuit board or a next-generation circuit board.

High-Frequency Insulation Layer

The antenna circuit board comprises a high-frequency insulation layer. The high-frequency insulation layer is not limited to a specific one as long as it is an insulation layer that can suppress transmission loss of electric signals in a high-frequency circuit. For example, the insulation layer may comprise a heat-resistant resin such as a thermoplastic liquid crystal polymer (LCP), a polyimide (PI) (in particular, a modified polyimide (MPI)), a polyethylene naphthalate (PEN), and a polyetheretherketone (PEEK). Of these, an insulation layer comprising a polyimide may be preferably used because such an insulation layer also has excellent heat resistance and chemical resistance. A thermoplastic liquid crystal polymer may be also preferably used in terms of excellent dielectric characteristics.
For example, the insulation layer may be formed from a thermoplastic liquid crystal polymer (TLCP) film or a polyimide film. In such a case, a circuit layer may be arranged on a TLCP film or a polyimide film to obtain an antenna circuit board.
The high-frequency insulation layer may have a dielectric constant εp of, for example, from 2.0 to 4.0, preferably from 2.2 to 3.5, and more preferably from 2.4 to 3.0 at a frequency of 28 GHz in each of a first direction and a second direction orthogonal to the first direction on a plane of the high-frequency insulation layer.
A ratio εf/εp of the dielectric constant εf of the low-dielectric layer to the dielectric constant εp of the high-frequency insulation layer may be from 30/70 to 60/40, preferably from 35/65 to 60/40, and more preferably from 38/62 to 55/45.
The high-frequency insulation layer may have a dielectric loss tangent tanδp of, for example, 0.010 or lower, preferably 0.005 or lower, and more preferably 0.003 or lower at a frequency of 28 GHz in each of a first direction and a second direction orthogonal to the first direction on a plane of the high-frequency insulation layer. The dielectric characteristics herein are measured by the method described above.
In terms of excellent heat resistance, a preferable insulation layer may comprise a polyimide (hereinafter, such a layer may sometimes be referred to as "polyimide insulation layer"). The polyimide is not limited to a specific one as long as it is a polymer having an imide group in its structural unit. Examples thereof may include polyimide resins such as a polyimide, a polyamideimide, a polybenzimidazole, a polyimide ester, a polyetherimide, and a polysiloxaneimide, and other polyimide resins.
A polyimide can be produced by imidizing (curing) a polyamic acid that is a precursor. The polyamic acid can

be synthesized by reacting a known diamine with a tetracarboxylic acid (including an acid anhydride thereof) in the presence of a solvent. The diamine may be an aromatic diamine, an aliphatic diamine, an alicyclic diamine, etc. In terms of heat resistance, an aromatic diamine is preferable. Examples of the aromatic diamine may include: 4,4'-diaminodiphenyl ether, 2'-methoxy-4,4'-diaminobenzanilide, 1,4-bis(4-aminophenoxy)benzene, 1,3-bis(4-aminophenoxy)benzene, 2,2'-bis[4-(4-aminophenoxy)phenyl]propane, 2,2'-dimethyl-4,4'-diaminobiphenyl, 3,3'-dihydroxy-4,4'-diaminobiphenyl, 4,4'-diaminobenzanilide, 5-amino-2-(p-aminophenyl)benzoxazole, and other aromatic diamines. The tetracarboxylic acid may be an aromatic tetracarboxylic acid, an aliphatic tetracarboxylic acid, an alicyclic tetracarboxylic acid, acid anhydrides thereof, etc. In terms of heat resistance, an aromatic tetracarboxylic acid anhydride is preferable. Examples of the aromatic tetracarboxylic acid anhydride may include: pyromellitic anhydride, 3,3',4,4'-biphenyltetracarboxylic acid dianhydride, 3,3',4,4'-diphenylsulphon tetracarboxylic acid dianhydride, 4,4'-oxydiphthalic acid anhydride, and other tetracarboxylic acid anhydrides. These diamines can be used alone or in combination of two or more; these tetracarboxylic acids can be used alone or in combination of two or more.

A polyimide film used for the polyimide insulation layer can be produced by, for example, reacting a diamine and a tetracarboxylic acid to obtain a solution of a polyamic acid (a polyimide precursor), applying the solution to a support, drying the solution to obtain a polyamic acid film, and then subjecting the film to heating to cure (imidize) the film. The polyamic acid solution may be applied by using a known application method such as spin coating, comma coater, screen printing method, slit coating, roll coating, knife coating, dip coating, and die coating.

The polyimide film may contain various additives, fillers and the like as long as the effect of the present invention is not impaired.

Examples of the polyimide film may include: Kapton EN, Kapton H, and Kapton V (all tradenames) available from Toray DuPont Co., Ltd.; Apical NPI (tradename) available from Kaneka Corporation; and Upirex S (tradename) available from Ube Industries, Ltd.

In terms of excellent dielectric characteristics, a preferable insulation layer may comprise a thermoplastic liquid crystal polymer (hereinafter, such a layer may sometimes be referred to as "thermoplastic liquid crystal polymer insulation layer" or "TLCP insulation layer"). A TLCP film used for the TLCP insulation layer is made of a melt-processable liquid crystal polymer. Chemical formulation of the thermoplastic liquid crystal polymer is not limited to a specific one as long as it is a melt-processabie liquid crystal polymer capable of forming an optically anisotropic melt phase, and examples thereof may include a thermoplastic liquid crystal polyester, or a thermoplastic liquid crystal polyester amide having an amide bond introduced thereto.

The thermoplastic liquid crystal polymer may also be a polymer obtained by further introducing, to an aromatic polyester or an aromatic polyester amide, an imide bond, a carbonate bond, a carbodiimide bond, or an isocyanate-derived bond such as an isocyanurate bond.

Specific examples of the thermoplastic liquid crystal polymer used in the present invention may include known thermoplastic liquid crystal polyesters and thermoplastic liquid crystal polyester amides obtained from compounds classified as (1) to (4) as exemplified in the following, and derivatives thereof. However, it is needless to say that, in order to form a polymer capable of forming an optically anisotropic melt phase, there is a suitable range regarding the combination of various raw-material compounds.

(1) Aromatic or aliphatic dihydroxyl compounds (see Table 1 for representative examples)

Table 1

| Chemical structural formulae of representative examples of aromatic or aliphatic dihydroxyl compounds | |
|---|---|
| 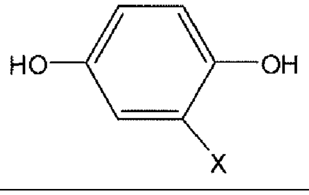 | X representshydrogen atom or a halogen atom, or a group such as a lower a alkyl (e.g., $C_{1-3}$ alkyl) or a phenyl |

(continued)

| Chemical structural formulae of representative examples of aromatic or aliphatic dihydroxyl compounds | |
|---|---|
| 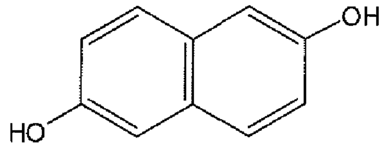 | 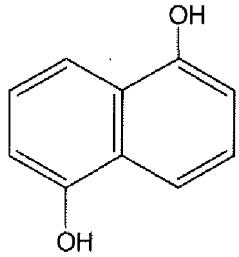 |
| 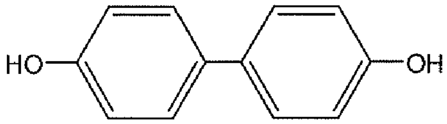 | |
| 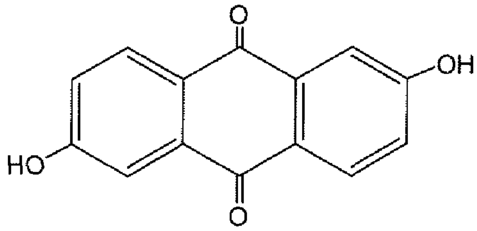 | 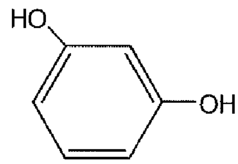 |
| 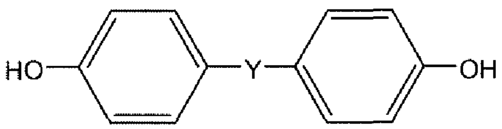 | Y represents a group such as -O-, $-CH_2-$, -S-, -CO-, $-C(CH_3)_2-$, or $-SO_2-$ |
| $HO(CH_2)_nOH$ | n is an integer of 2 to 12 |

(2) Aromatic or aliphatic dicarboxylic acids (see Table 2 for representative examples)

Table 2

| Chemical structural formulae of representative examples of aromatic or aliphatic dicarboxylic acids | |
|---|---|
| 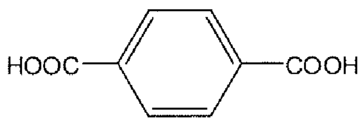 | 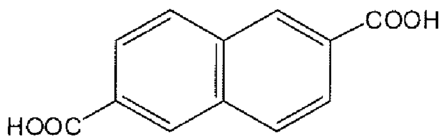 |
| 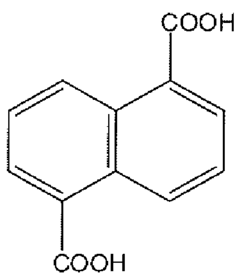 | 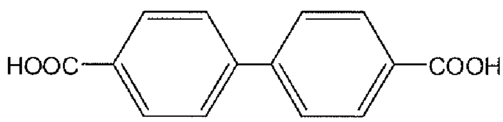 |
| 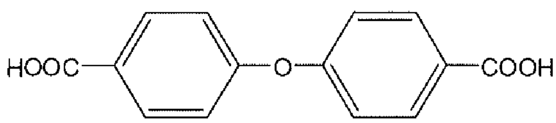 | |

(continued)

| Chemical structural formulae of representative examples of aromatic or aliphatic dicarboxylic acids |
|---|
| 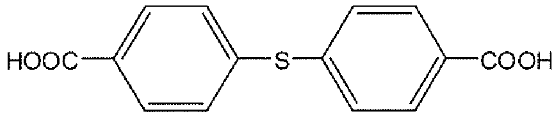 |
| 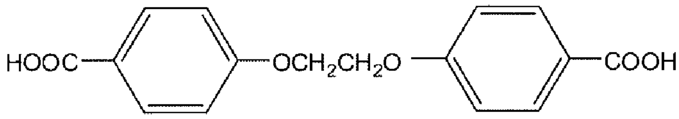 |
| 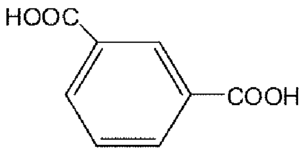 |
| $HOOC(CH_2)_nCOOH$ n is an integer of 2 to 12 |

(3) Aromatic hydroxycarboxylic acids (see Table 3 for representative examples)

Table 3

| Chemical structural formulae of representative examples of aromatic hydroxycarboxylic acids | |
|---|---|
| 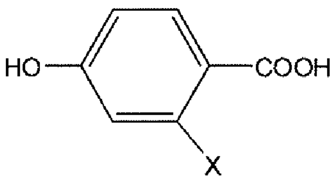 | X represents a hydrogen atom or a halogen atom, or a group such as a lower alkyl (e.g., $C_{1-3}$ alkyl) or a phenyl |
| 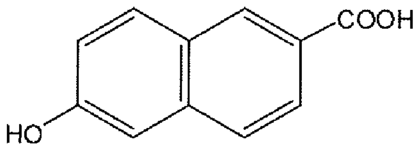 | 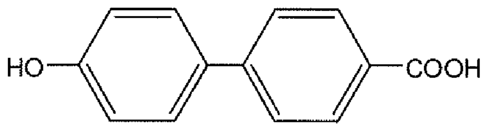 |
| 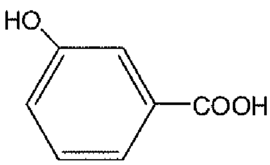 | |

(4) Aromatic diamines, aromatic hydroxy amines, or aromatic aminocarboxylic acids (see Table 4 for representative examples)

Table 4

| Chemical structural formulae of representative examples of aromatic diamines, aromatic hydroxy amines, or aromatic aminocarboxylic acids |
|---|
| 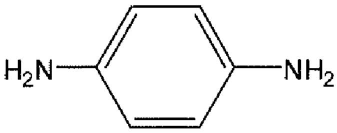 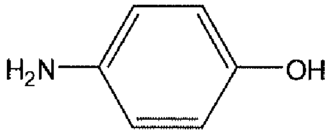 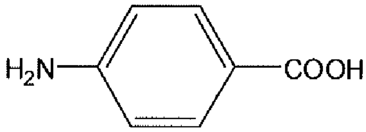 |

Representative examples of liquid crystal polymers obtained from these raw-material compounds may include copolymers having structural units shown in Tables 5 and 6.

Table 5

| | Representative examples (1) of thermoplastic liquid crystal polymer |
|---|---|
| (A) | 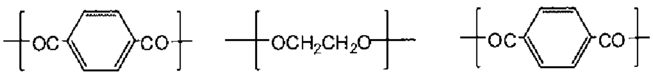 |
| (B) | 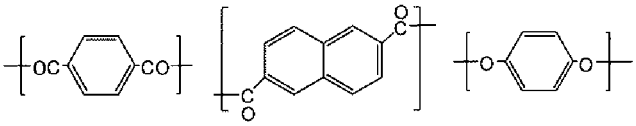 |
| (C) | 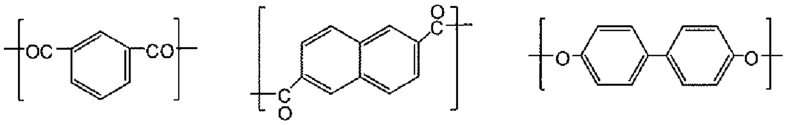 |
| (D) | 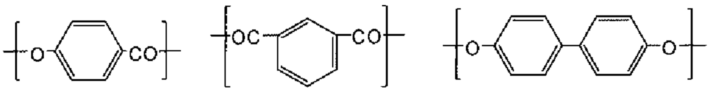 |
| (E) | 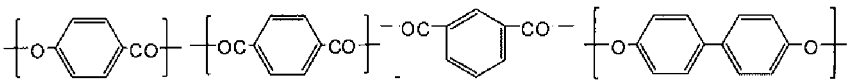 |
| (F) | 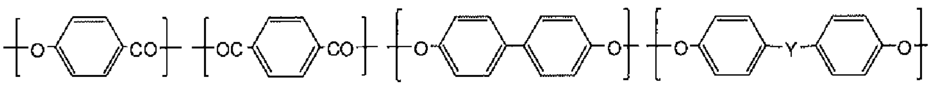 Y is a group such as -O-, -S-, or $-CH_2-$ |
| (G) | 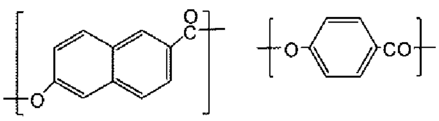 |
| (H) | 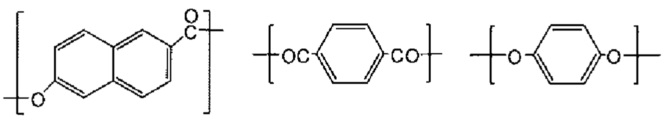 |
| (I) | 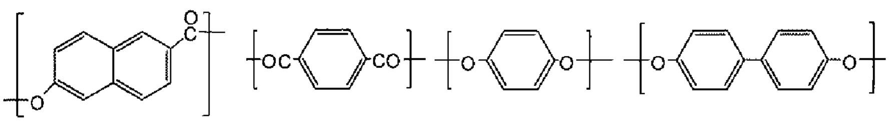 |
| (J) | 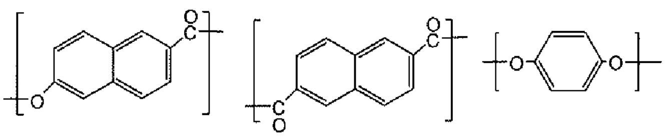 |

Table 6

| Representative examples (2) of thermoplastic liquid crystal polymer | |
|---|---|
| (K) | 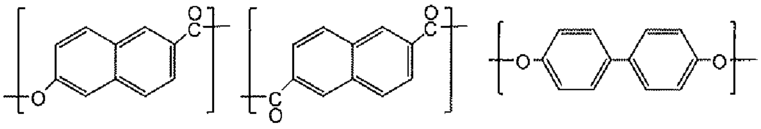 |
| (L) | 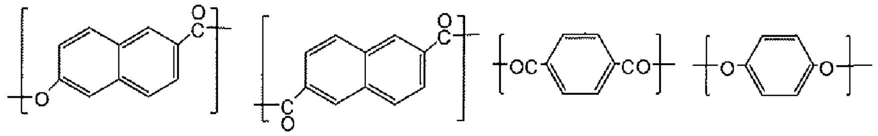 |
| (M) | 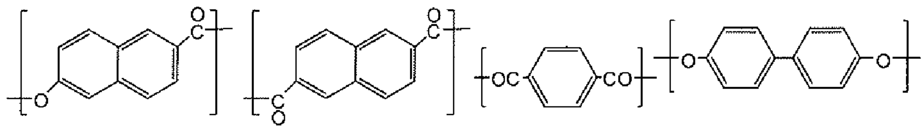 |
| (N) | 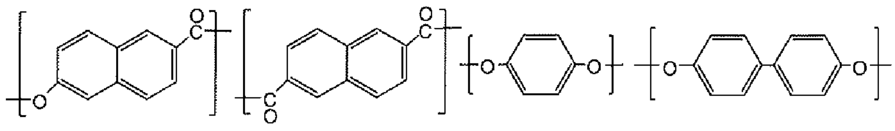 |
| (O) | 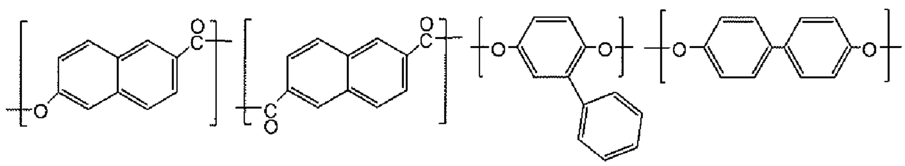 |
| (P) | 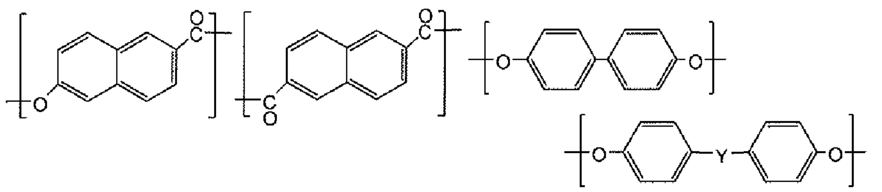 Y is a group such as -O-, -S-, or $-CH_2-$ |
| (Q) | 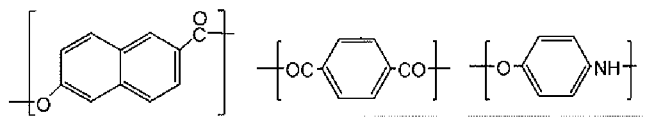 |

Of these copolymers, polymers including at least p-hydroxybenzoic acid and/or 6-hydroxy-2-naphthoic acid as repeating units are preferable; and particularly preferred polymers include:

a polymer (i) having repeating units of p-hydroxybenzoic acid and 6-hydroxy-2-naphthoic acid, and
a polymer (ii) having repeating units of

at least one aromatic hydroxycarboxylic acid selected from a group consisting of p-hydroxybenzoic acid and 6-hydroxy-2-naphthoic acid,
at least one aromatic diol and/or aromatic hydroxyamine, and
at least one aromatic dicarboxylic acid.

For example, in the case where the polymer (i) comprises a thermoplastic liquid crystal polymer having repeating units of at least p-hydroxybenzoic acid (A) and 6-hydroxy-2-naphthoic acid (B), the liquid crystal polymer may have a mole ratio (A)/(B) of preferably about (A)/(B) = 10/90 to 90/10, more preferably about (A)/(B) = 15/85 to 85/1, further preferably about (A)/(B) = 20/80 to 80/20.

Furthermore, in the case where the polymer (ii) comprises a thermoplastic liquid crystal polymer having repeating

units of at least one aromatic hydroxycarboxylic acid (C) selected from a group consisting of p-hydroxybenzoic acid and 6-hydroxy-2-naphthoic acid, at least one aromatic diol (D) selected from a group consisting of 4,4'-dihydroxybiphenyl, hydroquinone, phenylhydroquinone and 4,4'-dihydroxydiphenyl ether, and at least one aromatic dicarboxylic acid (E) selected from a group consisting of terephthalic acid, isophthalic acid, and 2,6-naphthalene dicarboxylic acid, the thermoplastic liquid crystal polymer may have a mole ratio of aromatic hydroxycarboxylic acid (C) : aromatic diol (D): aromatic dicarboxylic acid (E) = 30 to 80 : 35 to 10 : 35 to 10, more preferably about (C):(D):(E) = 35 to 75 : 32.5 to 12.5 : 32.5 to 12.5, and further preferably about (C):(D):(E) = 40 to 70 : 30 to 15 : 30 to 15.

Furthermore, the liquid crystal polymer may have a mole ratio of a repeating structural unit derived from 6-hydroxy-2-naphthoic acid to the aromatic hydroxycarboxylic acids (C), for example, of 85 mol% or higher, preferably 90 mol% or higher, and more preferably 95 mol% or higher. The liquid crystal polymer may have a mole ratio of a repeating structural unit derived from 2,6-naphthalene dicarboxylic acid to the aromatic dicarboxylic acids (E), for example, of 85 mol% or higher, preferably 90 mol% or higher, and more preferably 95 mol% or higher.

The aromatic diol (D) may include repeating structural units (D1) and (D2) derived from two different aromatic diols each selected from a group consisting of hydroquinone, 4,4'-dihydroxybiphenyl, phenylhydroquinone, and 4,4'-dihydroxydiphenyl ether. In such a case, the two aromatic diols may have a mole ratio (D1)/(D2) = 23/77 to 77/23, more preferably 25/75 to 75/25, and further preferably 30/70 to 70/30.

Furthermore, the liquid crystal polymer may have a mole ratio of a repeating structural unit derived from an aromatic diol to a repeating structural unit derived from an aromatic dicarboxylic acid of preferably (D)/(E) = 95/100 to 100/95. Deviation from this range may tend to result in a low degree of polymerization and deterioration in mechanical strength.

It should be noted that, in the present invention, optical anisotropy in a molten state can be determined by, for example, placing a sample on a hot stage, heating the sample at an elevating temperature in nitrogen atmosphere, and observing light transmitted through the sample.

A preferred thermoplastic liquid crystal polymer has a melting point (hereinafter, referred to as $Tm_0$) in a range of, for example, from 200°C to 360°C, preferably from 240°C to 360°C, more preferably from 260°C to 360°C, and further preferably from 270 to 350°C. The melting point $Tm_0$ may be determined by measuring a temperature at which a main endothermic peak occurs using a differential scanning calorimeter (DSC, manufactured by Shimadzu Corporation). That is, a melting point of a thermoplastic liquid crystal polymer sample may be determined by subjecting the sample to temperature elevation at a rate of 10°C/min to completely melt the sample, then to cooling at a rate of 10°C/min to 50°C, and again to temperature elevation at a rate of 10°C/min to determine the position of an endothermic peak during the second temperature elevation as the melting point of the polymer sample.

As long as the advantageous effect of the present invention is not deteriorated, to the thermoplastic liquid crystal polymer, may be added any thermoplastic polymer such as a polyethylene terephthalate, a modified polyethylene terephthalate, a polyolefin, a polycarbonate, a polyarylate, a polyamide, a polyphenylene sulfide, a polyetheretherketone, and a fluorine-containing resin; various additives; and/or fillers.

The TLCP film is obtained, for example, by extruding a melt-kneaded product of the thermoplastic liquid crystal polymer. Any extruding method may be used, and industrially advantageous methods include well-known T-die method, and inflation method. In particular, in the inflation method, stress can be applied not only in a machine axis direction (hereinafter, abbreviated as MD) of a TLCP film but also in a direction perpendicular thereto (hereinafter, abbreviated as TD) to draw a film uniformly in the MD and TD, so that an obtained TLCP film can have controlled molecular orientation, dielectric characteristics, and the like in the MD and TD.

As needed, the TLCP film may be subjected to a known or conventional heating to adjust the melting point and/or thermal expansion coefficient thereof. The heating conditions can be appropriately set according to the purpose. For example, the TLCP film may be heated for several hours at a temperature of ($Tm_0$ - 10)°C or higher (e.g., about (Tmo - 10)°C to (Tmo + 30)°C, and preferably about Tmo°C to (Tmo + 20)°C) to raise the melting point (Tm) of the TLCP film.

A circuit layer and/or conductor layer may be arranged on the obtained TLCP film by a known or conventional method to produce an antenna circuit board including a TLCP insulation layer.

The TLCP insulation layer may have a melting point (Tm) of, for example, from 200 to 380°C, and preferably from 240 to 370°C. The melting point (Tm) of the TLCP insulation layer may be determined by observing thermal behavior of a sample of the TLCP insulation layer (or TLCP film) using a differential scanning calorimeter. That is, a melting point of a TLCP film sample may be determined by subjecting the sample to temperature elevation at a rate of 10°C/min to determine the position of an endothermic peak that occurs during the temperature elevation as the melting point (Tm) of the TLCP film.

The TLCP insulation layer may have a thermal expansion coefficient of, for example, from 0 to 25 ppm/°C, and preferably from about 5 to 22 ppm/°C. The thermal expansion coefficient may be determined using a thermomechanical analyzer (TMA), by subjecting a sample to temperature elevation from 25°C to 200°C at a rate of 5°C/min, then to cooling at a rate of 20°C/min to 30°C, and again to temperature elevation at a rate of 5°C/min to determine the thermal expansion

coefficient from a measurement between 30°C and 150°C.

EXAMPLES

Hereinafter, the present invention will be specifically described with reference to Examples. However, these Examples are not to be construed as limiting the scope of the present invention.

Dielectric Constant and Dielectric Loss Tangent

As for each film used for the low-dielectric layer and the high-frequency insulation layer as described below, a dielectric constant and a dielectric loss tangent were measured using a Fabry-Perot resonator (model No. DPS03, manufactured by KEYCOM Corporation) at a frequency of 28 GHz (25°C) in accordance with JIS R 1660-2. The measurement was performed in each of a first direction and a second direction orthogonal to the first direction on a plane (X-Y direction) of each film.

Thicknesses of Antenna Circuit Board and Low-dielectric layer

A thickness of each antenna circuit board was measured using a micrometer (model No. 227-201-CLM-15QM, manufactured by Mitutoyo Cooperation). A thickness of the low-dielectric layer was determined by measuring a thickness of each film used as a low-dielectric layer. Alternatively, the thickness of the low-dielectric layer may be calculated by measuring the thickness of each of the whole antenna system, and the antenna circuit board and the glass in the antenna system and then subtracting the thicknesses of the antenna circuit board and the glass from the thickness of the whole antenna system.

Viscosity of Polyvinyl Acetal Resin Solution

A polyvinyl acetal resin for forming a polyvinyl acetal resin film was dissolved in a mixed solvent of toluene / ethanol (mass ratio: 1/1) at a concentration of 10% by mass to obtain a polyvinyl acetal resin solution. The viscosity of the obtained solution was measured using a Brookfield (B-type) viscometer at a temperature of 20°C and a rotation speed of 30 rpm.

Example 1

<Production of Antenna Circuit Board>

On opposite sides of a TLCP film ("Vecstar" (registered trademark) available from Kuraray Co., Ltd.; thickness: 50 μm, X-direction dielectric constant: 3.4, Y-direction dielectric constant: 3.4, X-direction dielectric loss tangent: 0.002, Y-direction dielectric loss tangent: 0.002), were overlaid copper foils (electrolytic copper foil "H9A" available from Fukuda Metal Foil & Powder Co. Ltd.; thickness: 12 μm). The overlaid material of the upper copper foil, the TLCP film and the lower copper foil was subjected to thermo-compression bonding by using a vacuum hot press machine with hot plates set to 290°C for 15 minutes under a pressure of 4 MPa to produce a copper clad laminate having a structure of copper foil / TLCP film / copper foil. The copper foil on one of the sides of the obtained copper clad laminate was partially removed by an etching solution to form a circuit, and this operation was repeated to produce an antenna circuit board (5 cm long, 5 cm wide) having a thickness of 400 μm.

<Production of Polyvinyl Acetal Resin Film>

A blend containing a polyvinyl butyral resin 1 (amount of hydroxyl groups: 19.8% by mass, acetalization degree: 70.8 mol%, amount of acetyl groups: 1.0% by mass, resin viscosity: 152 mPa·s) and a polyvinyl butyral resin 2 (amount of hydroxyl groups: 20.1% by mass, acetalization degree: 70.4 mol%, amount of acetyl groups: 0.9% by mass, resin viscosity: 1410 mPa·s) at a mass ratio of 75:25 was melt-kneaded and extruded into strands to produce pellets. The obtained pellets were melt-extruded using a single-screw extruder and then discharged from a T-die to produce a 50-μm thick polyvinyl acetal resin film (X-direction dielectric constant: 2.5, Y-direction dielectric constant: 2.5, X-direction dielectric loss tangent: 0.01, Y-direction dielectric loss tangent: 0.01, content of plasticizer: 0% by mass, resin viscosity: 245 mPa·s) with a smooth surface using a metal elastic roll.

<Production of Laminate>

On a lower glass (20 cm long, 10 cm wide, and 3 mm thick), were overlaid a one-side-embossed Teflon (registered trademark) sheet, the obtained, dried polyvinyl acetal resin film (5 cm long, 5 cm wide, and 50 μm thick), the obtained antenna circuit board (5 cm long, 5 cm wide), a one-side-embossed Teflon (registered trademark) sheet, and then an upper glass (5 cm long, 5 cm wide, and 3 mm thick) in this order with a fixed position. The polyvinyl acetal resin film, the antenna circuit board, and the upper glass were positioned in a mutually overlapping position.

The Teflon (registered trademark) sheet adjacent to the polyvinyl acetal resin film was arranged such that the embossed side of the sheet was in contact with the polyvinyl acetal resin film. The Teflon (registered trademark) sheet adjacent to the antenna circuit board was arranged such that the un-embossed side was in contact with the antenna circuit board. The antenna circuit board was arranged such that the side with the circuit was in contact with the polyvinyl acetal resin film.

These overlaid materials were heated using a vacuum laminating machine under vacuum at 140°C for 15 minutes, and then was kept for 15 minutes with an upper chamber set to -10 kPa (i.e., with a pressure difference of about 90 kPa from a lower chamber). Thereafter, the pressure of the machine was allowed to return to a normal pressure. Then, the upper and lower Teflon (registered trademark) sheets and the upper and lower glasses were removed to obtain a laminate including the layers of the polyvinyl acetal resin film (low-dielectric layer) / the circuit (circuit layer) / the antenna circuit board inner layer (multilayer board including the TLCP film as an insulation layer) / the copper foil (conductor layer) in this order.

<Production of Antenna System>

The above-mentioned laminate (5 cm long, 5 cm wide) was overlaid on a lower glass (length: 20 cm, width: 10 cm, thickness: 3 mm, X-direction dielectric constant: 6.5, Y-direction dielectric constant: 6.5, X-direction dielectric loss tangent: 0.01, and Y-direction dielectric loss tangent: 0.01) such that the polyvinyl acetal resin film (low-dielectric layer) was in contact with the lower glass. A Teflon (registered trademark) sheet and an upper glass (5 cm long, 5 cm wide, and 3 mm thick) were further overlaid thereon in this order with a fixed position. The antenna circuit board was arranged in a region located inward by 2 cm to 7 cm from an end portion of the lower glass in the length direction. The laminate and the upper glass were positioned in a mutually overlapping position.

These overlaid materials were heated using a vacuum laminating machine under vacuum at 140°C for 15 minutes, and then was kept for 15 minutes with an upper chamber set to -10 kPa (i.e., with a pressure difference of about 90 kPa from a lower chamber). Thereafter, the pressure of the machine was allowed to return to a normal pressure. Then, the Teflon (registered trademark) sheet and the upper glass were removed to obtain an antenna system including the layers of the glass (first glass layer) / the polyvinyl acetal resin film (low-dielectric layer) / the circuit (circuit layer) / the antenna circuit board inner layer (multilayer board including the TLCP film as an insulation layer) / the copper foil (conductor layer) in this order, in which the antenna circuit board was arranged on a part of the glass. The obtained antenna system did not show partial detachment, air bubbles, nor breakage and/or deformation of the circuit. In the obtained antenna system, since the low-dielectric layer has a lower dielectric constant than that of the glass, the high-frequency waves entering the glass can be transmitted through the low-dielectric layer to reach the antenna circuit board.

Example 2

<Production of Antenna System>

The laminate (5 cm long, 5 cm wide) obtained in Example 1 was overlaid on a lower glass (length: 20 cm, width: 10 cm, thickness: 3 mm, X-direction dielectric constant: 6.5, Y-direction dielectric constant: 6.5, X-direction dielectric loss tangent: 0.01, and Y-direction dielectric loss tangent: 0.01) such that the polyvinyl acetal resin film (low-dielectric layer) was in contact with the lower glass. On the laminate, were further overlaid the dried polyvinyl acetal resin film (5 cm long, 5 cm wide, and 50 μm thick) obtained in Example 1 and then a thin-plate glass (5 cm long, 5 cm wide, and 1 mm thick) in this order with a fixed position. The antenna circuit board was arranged in a region located inward by 2 cm to 7 cm from an end portion of the lower glass in the length direction. The laminate and the thin-plate glass were positioned in a mutually overlapping position.

These overlaid materials were heated using a vacuum laminating machine under vacuum at 140°C for 15 minutes, and then was kept for 15 minutes with an upper chamber set to -10 kPa (i.e., with a pressure difference of about 90 kPa from a lower chamber). Thereafter, the pressure of the machine was allowed to return to a normal pressure. As a result, was obtained an antenna system including the layers of the glass (first glass layer) / the polyvinyl acetal resin film (low-dielectric layer) / the circuit (circuit layer) / the antenna circuit board inner layer (multilayer board including the TLCP film as an insulation layer) / the copper foil (conductor layer) / the polyvinyl acetal resin film (low-dielectric

layer) / the thin-plate glass (protective layer) in this order, in which the antenna circuit board with the protective glass plate was arranged on a part of the glass. The obtained antenna system did not show partial detachment, air bubbles, nor breakage and/or deformation of the circuit. In the obtained antenna system, since the low-dielectric layer has a lower dielectric constant than that of the glass, the high-frequency waves entering the glass can be transmitted through the low-dielectric layer to reach the antenna circuit board.

Example 3

<Production of Laminate>

On a glass (20 cm long, 10 cm wide, and 3 mm thick), were overlaid a one-side-embossed Teflon (registered trademark) sheet, the dried polyvinyl acetal resin film (5 cm long, 5 cm wide, and 50 μm thick) obtained in Example 1, the antenna circuit board (5 cm long, 5 cm wide) obtained in Example 1, the dried polyvinyl acetal resin film (5 cm long, 5 cm wide, and 50 μm thick) obtained in Example 1, and a thin-plate glass (5 cm long, 5 cm wide, and 1mm thick) in this order with a fixed position. The polyvinyl acetal resin film, the antenna circuit board, and the thin-plate glass were positioned in a mutually overlapping position.

The Teflon (registered trademark) sheet was arranged such that the embossed side of the sheet was in contact with the polyvinyl acetal resin film. The antenna circuit board was arranged such that the side with the circuit was in contact with the polyvinyl acetal resin film that was in contact with the Teflon (registered trademark) sheet.

These overlaid materials were heated using a vacuum laminating machine under vacuum at 140°C for 15 minutes, and then was kept for 15 minutes with an upper chamber set to -10 kPa (i.e., with a pressure difference of about 90 kPa from a lower chamber). Thereafter, the pressure of the machine was allowed to return to a normal pressure. The Teflon (registered trademark) sheet and the glass were removed to obtain a laminate including the layers of the polyvinyl acetal resin film (low-dielectric layer) / the circuit (circuit layer) / the antenna circuit board inner layer (multilayer board including the TLCP film as an insulation layer) / the copper foil (conductor layer) / the polyvinyl acetal resin film (low-dielectric layer) / the thin-plate glass (protective layer) in this order.

<Production of Antenna System>

Thus-obtained laminate (5 cm long, 5 cm wide) was overlaid and fixed on a glass (length: 20 cm, width: 10 cm, thickness: 3 mm, X-direction dielectric constant: 6.5, Y-direction dielectric constant: 6.5, X-direction dielectric loss tangent: 0.01, Y-direction dielectric loss tangent: 0.01) such that the polyvinyl acetal resin film (low-dielectric layer) was in contact with the glass. The laminate was arranged in a region located inward by 2 cm to 7 cm from an end portion of the glass in the length direction of the glass.

These overlaid materials were heated using a vacuum laminating machine under vacuum at 140°C for 15 minutes, and then was kept for 15 minutes with an upper chamber set to -10 kPa (i.e., with a pressure difference of about 90 kPa from a lower chamber). Thereafter, the pressure of the machine was allowed to return to a normal pressure. As a result, was obtained an antenna system including the layers of the glass (first glass layer) / the polyvinyl acetal resin film (low-dielectric layer) / the circuit (circuit layer) / the antenna circuit board inner layer (multilayer board including the TLCP film as an insulation layer) / the copper foil (conductor layer) / the polyvinyl acetal resin film (low-dielectric layer) / the thin-plate glass (protective layer) in this order, in which the antenna circuit board with the protective glass plate was arranged on a part of the glass. The obtained antenna system did not show partial detachment, air bubbles, nor breakage and/or deformation of the circuit. In the obtained antenna system, since the low-dielectric layer has a lower dielectric constant than that of the glass, the high-frequency waves entering the glass can be transmitted through the low-dielectric layer to reach the antenna circuit board.

Example 4

<Production of Laminate>

On a lower glass (20 cm long, 10 cm wide, and 3 mm thick), were overlaid a one-side-embossed Teflon (registered trademark) sheet, the dried polyvinyl acetal resin film (5 cm long, 5 cm wide, and 50 μm thick) obtained in Example 1, the antenna circuit board (5 cm long, 5 cm wide) obtained in Example 1, the dried polyvinyl acetal resin film (5 cm long, 5 cm wide, and 50 μm thick) obtained in Example 1, a one-side-embossed Teflon (registered trademark) sheet, and an upper glass (5 cm long, 5 cm wide, and 3 mm thick) in this order with a fixed position. Each Teflon (registered trademark) sheet was arranged such that the embossed side of the sheet was in contact with the polyvinyl acetal resin film. The antenna circuit board was arranged such that the side with the circuit was in contact with the polyvinyl acetal resin film located closer to the lower glass.

These overlaid materials were heated using a vacuum laminating machine under vacuum at 140°C for 15 minutes, and then was kept for 15 minutes with an upper chamber set to -10 kPa (i.e., with a pressure difference of about 90 kPa from a lower chamber). Thereafter, the pressure of the machine was allowed to return to a normal pressure. The upper and lower Teflon (registered trademark) sheets and the upper and lower glasses were removed to obtain a laminate including the layers of the polyvinyl acetal resin film (low-dielectric layer) / the circuit (circuit layer) / the antenna circuit board inner layer (multilayer board including the TLCP film as an insulation layer) / the copper foil (conductor layer) / the polyvinyl acetal resin film (low-dielectric layer) in this order.

<Production of Antenna System>

Thus-obtained laminate (5 cm long, 5 cm wide) was overlaid on a glass (length: 20 cm, width: 10 cm, thickness: 3 mm, X-direction dielectric constant: 6.5, Y-direction dielectric constant: 6.5, X-direction dielectric loss tangent: 0.01, Y-direction dielectric loss tangent: 0.01) such that polyvinyl acetal resin film (low-dielectric layer) in contact with the circuit layer was placed in contact with the glass, and a thin-plate glass (5 cm long, 5 cm wide, and 1 mm thick) was overlaid thereon with a fixed position. The antenna circuit board was arranged in a region located inward by 2 cm to 7 cm from an end portion of the glass in the length direction. The laminate and the thin-plate glass were positioned in a mutually overlapping position.

These overlaid materials were heated using a vacuum laminating machine under vacuum at 140°C for 15 minutes, and then was kept for 15 minutes with an upper chamber set to -10 kPa (i.e., with a pressure difference of about 90 kPa from a lower chamber). Thereafter, the pressure of the machine was allowed to return to a normal pressure. As a result, was obtained an antenna system including the layers of the glass (first glass layer) / the polyvinyl acetal resin film (low-dielectric layer) / the circuit (circuit layer) / the antenna circuit board inner layer (multilayer board including the TLCP film as an insulation layer) / the copper foil (conductor layer) / the polyvinyl acetal resin film (low-dielectric layer) / the thin-plate glass (protective layer) in this order, in which the antenna circuit board with the protective glass plate was arranged on a part of the glass. The obtained antenna system did not show partial detachment, air bubbles, nor breakage and/or deformation of the circuit. In the obtained antenna system, since the low-dielectric layer has a lower dielectric constant than that of the glass, the high-frequency waves entering the glass can be transmitted through the low-dielectric layer to reach the antenna circuit board.

Example 5

<Production of Laminate>

A laminate of Example 5 was produced in the same manner as Example 1 except for using, instead of the polyvinyl acetal resin film (5 cm long, 5 cm wide, and 50 $\mu$m thick), a plasticized polyvinyl acetal resin film (5 cm long, 5 cm wide, 0.38 mm thick; X-direction dielectric constant: 2.7, Y-direction dielectric constant: 2.7, X-direction dielectric loss tangent: 0.02, Y-direction dielectric loss tangent: 0.02) containing 72% by mass of a polyvinyl butyral resin (amount of hydroxyl groups: 28.8% by mass, viscosity-average polymerization degree: 1700) and 28% by mass of triethylene glycol-bis-(2-ethylhexanoate). The obtained laminate included the layers of the plasticized polyvinyl acetal resin film (low-dielectric layer) / the circuit (circuit layer) / the antenna circuit board inner layer (multilayer board including the TLCP film as an insulation layer) / the copper foil (conductor layer) in this order.

<Production of Antenna System>

An antenna system of Example 5 was produced in the same manner as Example 1 except for using the above-described laminate instead of the laminate of Example 1. The obtained antenna system included the layers of the glass (first glass layer) / the plasticized polyvinyl acetal resin film (low-dielectric layer) / the circuit (circuit layer) / the antenna circuit board inner layer (multilayer board including the TLCP film as an insulation layer) / the copper foil (conductor layer) in this order, with the antenna circuit board arranged on a part of the glass. The obtained antenna system did not show partial detachment, air bubbles, nor breakage and/or deformation of the circuit. In the obtained antenna system, since the low-dielectric layer has a lower dielectric constant than that of the glass, the high-frequency waves entering the glass can be transmitted through the low-dielectric layer to reach the antenna circuit board.

Example 6

<Production of Antenna System>

An antenna system of Example 6 was produced in the same manner as Example 2 except for using the laminate

of Example 5 instead of the laminate of Example 1 and using the plasticized polyvinyl acetal resin film (5 cm long, 5 cm wide, 0.38 mm thick) used in Example 5 instead of the polyvinyl acetal resin film (5 cm long, 5 cm wide, and 50 μm thick). The obtained antenna system included the layers of the glass (first glass layer) / the plasticized polyvinyl acetal resin film (low-dielectric layer) / the circuit (circuit layer) / the antenna circuit board inner layer (multilayer board including the TLCP film as an insulation layer) / the copper foil (conductor layer) / the plasticized polyvinyl acetal resin film (low-dielectric layer) / the thin-plate glass (protective layer) in this order, in which the antenna circuit board with the protective glass plate was arranged on a part of the glass. The obtained antenna system did not show partial detachment, air bubbles, nor breakage and/or deformation of the circuit. In the obtained antenna system, since the low-dielectric layer has a lower dielectric constant than that of the glass, the high-frequency waves entering the glass can be transmitted through the low-dielectric layer to reach the antenna circuit board.

Example 7

<Production of Laminate>

A laminate of Example 7 was produced in the same manner as Example 1 except for using, instead of the polyvinyl acetal resin film (5 cm long, 5 cm wide, and 50 μm thick), an ionomer resin film (a thin film prepared by heat pressing SentryGlas (registered trademark) SG5000 available from Kuraray Co., Ltd.; 5 cm long, 5 cm wide, and 50 μm thick; X-direction dielectric constant: 2.2, Y-direction dielectric constant: 2.2, X-direction dielectric loss tangent: 0.002, Y-direction dielectric loss tangent :0.002). The obtained laminate included the layers of the ionomer resin film (low-dielectric layer) / the circuit (circuit layer) / the antenna circuit board inner layer (multilayer board including the TLCP film as an insulation layer) / the copper foil (conductor layer) in this order.

<Production of Antenna System>

An antenna system of Example 7 was produced in the same manner as Example 2 except for using the above-described laminate instead of the laminate of Example 1 and using an ionomer resin film (a thin film prepared by heat pressing SentryGlas (registered trademark) SG5000 available from Kuraray Co., Ltd.; 5 cm long, 5 cm wide, and 50 μm thick) instead of the polyvinyl acetal resin film (5 cm long, 5 cm wide, and 50 μm thick). The obtained antenna system included the layers of the glass (first glass layer) / the ionomer resin film (low-dielectric layer) / the circuit (circuit layer) / the antenna circuit board inner layer (multilayer board including the TLCP film as an insulation layer) / the copper foil (conductor layer) / the ionomer resin film (low-dielectric layer) / the thin-plate glass (protective layer) in this order, in which the antenna circuit board with the protective glass plate was arranged on a part of the glass. The obtained antenna system did not show partial detachment, air bubbles, nor breakage and/or deformation of the circuit. In the obtained antenna system, since the low-dielectric layer has a lower dielectric constant than that of the glass, the high-frequency waves entering the glass can be transmitted through the low-dielectric layer to reach the antenna circuit board.

Example 8

<Production of Laminate>

A laminate of Example 8 is produced in the same manner as Example 1 except for using, instead of the polyvinyl acetal resin film (5 cm long, 5 cm wide, and 50 μm thick), a polyvinyl acetal resin film (5 cm long, 5 cm wide, and 30 μm thick). The obtained laminate included the layers of the polyvinyl acetal resin film (low-dielectric layer) / the circuit (circuit layer) / the antenna circuit board inner layer (multilayer board including the TLCP film as an insulation layer) / the copper foil (conductor layer) in this order.

<Production of Antenna System>

An antenna system of Example 8 is produced in the same manner as Example 2 except for using the above-described laminate instead of the laminate of Example 1. The obtained antenna system includes the layers of the glass (first glass layer) / the polyvinyl acetal resin film (low-dielectric layer) / the circuit (circuit layer) / the antenna circuit board inner layer (multilayer board including the TLCP film as an insulation layer) / the copper foil (conductor layer) / the polyvinyl acetal resin film (low-dielectric layer) / the thin-plate glass (protective layer ) in this order, in which the antenna circuit board with the protective glass plate is arranged on a part of the glass. Since the polyvinyl acetal resin film having a thickness of 30 μm is made of a similar polyvinyl acetal resin to that of the polyvinyl acetal resin film obtained in Example 1, the film is expected to have an equivalent dielectric constant. In the obtained antenna system, since the low-dielectric layer has a lower dielectric constant than that of the glass, it is expected that the high-frequency waves entering

the glass can be transmitted through the low-dielectric layer to reach the antenna circuit board.

Example 9

<Production of Antenna System>

On a lower glass (length: 20 cm, width: 10 cm, thickness: 3 mm, X-direction dielectric constant: 6.5, Y-direction dielectric constant: 6.5, X-direction dielectric loss tangent: 0.01, Y-direction dielectric loss tangent: 0.01), were overlaid the dried polyvinyl acetal resin film (5 cm long, 5 cm wide, and 50 μm thick) obtained in Example 1, the antenna circuit board (5 cm long, 5 cm wide) obtained in Example 1, a Teflon (registered trademark) sheet, and an upper glass (5 cm long, 5 cm wide, and 3 mm thick) in this order with a fixed position. The antenna circuit board was arranged such that the side with the circuit was in contact with the polyvinyl acetal resin film. The polyvinyl acetal resin film, the antenna circuit board, and the upper glass were positioned in a mutually overlapping position.

These overlaid materials were heated using a vacuum laminating machine under vacuum at 140°C for 15 minutes, and then was kept for 15 minutes with an upper chamber set to -10 kPa (i.e., with a pressure difference of about 90 kPa from a lower chamber). Thereafter, the pressure of the machine was allowed to return to a normal pressure. The Teflon (registered trademark) sheet and the upper glass were removed to obtain an antenna system including the layers of the glass (first glass layer) / the polyvinyl acetal resin film (low-dielectric layer) / the circuit (circuit layer) / the antenna circuit board inner layer (multilayer board including the TLCP film as an insulation layer) / the copper foil (conductor layer) in this order, with the antenna circuit board arranged on a part of the glass. The obtained antenna system did not show partial detachment, air bubbles, nor breakage and/or deformation of the circuit. In the obtained antenna system, since the low-dielectric layer has a lower dielectric constant than that of the glass, the high-frequency waves entering the glass can be transmitted through the low-dielectric layer to reach the antenna circuit board.

Example 10

<Production of Antenna System>

On a lower glass (length: 20 cm, width: 10 cm, thickness: 3 mm, X-direction dielectric constant: 6.5, Y-direction dielectric constant: 6.5, X-direction dielectric loss tangent: 0.01, and Y-direction dielectric loss tangent: 0.01), were overlaid the dried polyvinyl acetal resin film (5 cm long, 5 cm wide, and 50 μm thick) obtained in Example 1, the antenna circuit board (5 cm long, 5 cm wide) obtained in Example 1, the dried polyvinyl acetal resin film (5 cm long, 5 cm wide, and 50 μm thick) obtained in Example 1, and a thin-plate glass (5 cm long, 5 cm wide, and 1 mm thick) in this order with a fixed position. The antenna circuit board was arranged such that the side with the circuit was in contact with the polyvinyl acetal resin film located closer to the lower glass. The antenna circuit board was arranged in a region located inward by 2 cm to 7 cm from an end portion of the lower glass in the length direction. The antenna circuit board, the two polyvinyl acetal resin films, and the thin-plate glass were positioned in a mutually overlapping position.

These overlaid materials were placed in a vacuum bag, and the pressure in the bag was lowered at room temperature and kept for 15 minutes. Then, with the reduced pressure maintained, the temperature was raised to 135°C and kept 30 minutes. Thereafter, the temperature was lowered, and the reduced pressure was released. As a result, was obtained an antenna system including the layers of the glass (first glass layer) / the polyvinyl acetal resin film (low-dielectric layer) / the circuit (circuit layer) / the antenna circuit board inner layer (multilayer board including the TLCP film as an insulation layer) / the copper foil (conductor layer) / the polyvinyl acetal resin film (low-dielectric layer) / the thin-plate glass (protective layer) in this order, in which the antenna circuit board with the protective glass plate was arranged on a part of the glass. The obtained antenna system did not show partial detachment, air bubbles, nor breakage and/or deformation of the circuit. In the obtained antenna system, since the low-dielectric layer has a lower dielectric constant than that of the glass, the high-frequency waves entering the glass can be transmitted through the low-dielectric layer to reach the antenna circuit board.

Example II

<Production of Antenna System>

An antenna system of Example 11 was produced in the same manner as Example 9 except for using, instead of the polyvinyl acetal resin film (5 cm long, 5 cm wide, and 50 μm thick), the plasticized polyvinyl acetal resin film (5 cm long, 5 cm wide, 0.38 mm thick) used in Example 5. The obtained antenna system included the layers of the glass (first glass layer) / the plasticized polyvinyl acetal resin film (low-dielectric layer) / the circuit (circuit layer) / the antenna circuit board inner layer (multilayer board including the TLCP film as an insulation layer) / the copper foil (conductor

layer) in this order, with the antenna circuit board arranged on a part of the glass. The obtained antenna system did not show partial detachment, air bubbles, nor breakage and/or deformation of the circuit. In the obtained antenna system, since the low-dielectric layer has a lower dielectric constant than that of the glass, the high-frequency waves entering the glass can be transmitted through the low-dielectric layer to reach the antenna circuit board.

Example 12

<Production of Antenna System>

On a glass (length: 20 cm, width: 10 cm, thickness: 3 mm, X-direction dielectric constant: 6.5, Y-direction dielectric constant: 6.5, X-direction dielectric loss tangent: 0.01, Y-direction dielectric loss tangent: 0.01), were overlaid the dried, plasticized polyvinyl acetal resin film (7 cm long, 7 cm wide, 0.38 mm thick) used in Example 5, the antenna circuit board (5 cm long, 5 cm wide) obtained in Example 1 placed at the center of the plasticized polyvinyl acetal resin film, the dried polyvinyl acetal resin film (7 cm long, 7 cm wide, 50 μm thick) obtained in Example 1, and a thin-plate glass (7 cm long, 7 cm wide, 1 mm thick) in this order with a fixed position. The antenna circuit board was arranged such that the side with the circuit was in contact with the plasticized polyvinyl acetal resin film. The antenna circuit board was arranged in a region located inward by 2 cm to 7 cm from an end portion of the glass in the length direction. The two polyvinyl acetal resin films and the thin-plate glass were positioned in a mutually overlapping position.

These overlaid materials were placed in a vacuum bag, and the pressure in the bag was lowered at room temperature and kept for 15 minutes. Then, with the reduced pressure maintained, the temperature was raised to 100°C and kept for 30 minutes. Thereafter, the temperature was lowered, and the reduced pressure was released to obtain the temporarily thermocompressionbonded layers. The temporarily bonded layers were placed into an autoclave to perform treatment for 30 minutes at a temperature of 140°C under a pressure of 12 MPa. As a result, was obtained an antenna system including the layers of the glass (first glass layer) / the plasticized polyvinyl acetal resin film (low-dielectric layer) / the circuit (circuit layer) / the antenna circuit board inner layer (multilayer board including the TLCP film as an insulation layer) / the copper foil (conductor layer) / the polyvinyl acetal resin film (low-dielectric layer) / the thin-plate glass (protective layer) in this order, in which the antenna circuit board with the protective glass plate was arranged on a part of the glass. The obtained antenna system did not show partial detachment, air bubbles, nor breakage and/or deformation of the circuit. In the obtained antenna system, since the low-dielectric layer has a lower dielectric constant than that of the glass, the high-frequency waves entering the glass can be transmitted through the low-dielectric layer to reach the antenna circuit board.

Example 13

<Production of Antenna System>

On a lower glass (length 30 cm, width 30 cm, thickness: 3 mm, X-direction dielectric constant: 6.5, Y-direction dielectric constant: 6.5, X-direction dielectric loss tangent: 0.01, Y-direction dielectric loss tangent: 0.01), overlaid was the laminate obtained in Example 1 such that the polyvinyl acetal resin film (low-dielectric layer) was in contact with the lower glass. Further, thereon were overlaid an intermediate film (30 cm long, 30 cm wide, and 0.76 mm thick) of a plasticized polyvinyl acetal resin containing 72% by mass of a polyvinyl butyral resin (amount of hydroxyl groups: 28.8% by mass, viscosity-average polymerization degree: 1700) and 28% by mass of triethylene glycol bis(2-ethylhexanoate) and an upper glass (30 cm long, 30 cm wide, and 3 mm thick) in this order with a fixed position. The antenna circuit board was arranged at the center of the lower glass in the in-plane direction.

These overlaid materials were placed in a vacuum bag, and the pressure in the bag was lowered at room temperature and kept for 15 minutes. Then, with the reduced pressure maintained, the temperature was raised to 100°C and kept for 30 minutes. Thereafter, the temperature was lowered, and the reduced pressure was released to obtain the temporarily thermocompressionbonded layers. The temporarily bonded layers were placed into an autoclave to perform treatment for 30 minutes at a temperature of 140°C under a pressure of 12 MPa. As a result, was obtained an antenna system including the layers of the glass (first glass layer) / the polyvinyl acetal resin film (first low-dielectric layer) / the circuit (circuit layer) / the antenna circuit board inner layer (multilayer board including the TLCP film as an insulation layer) / the copper foil (conductor layer) / the plasticized polyvinyl acetal resin intermediate film (second low-dielectric layer) / the glass (second glass layer) in this order, with the antenna circuit board enclosed in the laminated glass. The obtained antenna system did not show air bubbles or notable optical inconsistency even around the antenna circuit. In the obtained antenna system, since the low-dielectric layer has a lower dielectric constant than that of the glass, the high-frequency waves entering the glass can be transmitted through the low-dielectric layer to reach the antenna circuit board.

Example 14

<Production of Antenna System>

On a lower glass (length 30 cm, width 30 cm, thickness: 3 mm, X-direction dielectric constant: 6.5, Y-direction dielectric constant: 6.5, X-direction dielectric loss tangent: 0.01, Y-direction dielectric loss tangent: 0.01), was overlaid the dried polyvinyl acetal resin film obtained in Example 1 (7 cm long, 7 cm wide, 50 μm thick). Further, the antenna circuit board (5 cm long, 5 cm wide) obtained in Example 1 was overlaid thereon at the center of the polyvinyl acetal resin film, and then the plasticized polyvinyl acetal resin intermediate film (30 cm long, 30 cm wide, and 0.76 mm thick) used in Example 13 and an upper glass (30 cm long, 30 cm wide, and 3 mm thick) were overlaid thereon in this order with a fixed position. The antenna circuit board was arranged such that the side with the circuit was in contact with the polyvinyl acetal resin film. The antenna circuit board was arranged at the center of the lower glass in the in-plane direction.

These overlaid materials were placed in a vacuum bag, and the pressure in the bag was lowered at room temperature and kept for 15 minutes. Then, with the reduced pressure maintained, the temperature was raised to 100°C and kept for 30 minutes. Thereafter, the temperature was lowered, and the reduced pressure was released to obtain the temporarily thermocompressionbonded layers. The temporarily bonded layers were placed into an autoclave to perform treatment for 30 minutes at a temperature of 140°C under a pressure of 12 MPa. As a result, was obtained an antenna system including the layers of the glass (first glass layer) / the polyvinyl acetal resin film (first low-dielectric layer) / the circuit (circuit layer) / the antenna circuit board inner layer (multilayer board including the TLCP film as an insulation layer) / the copper foil (conductor layer) / the plasticized polyvinyl acetal resin intermediate film (second low-dielectric layer) / the glass (second glass layer) in this order, with the antenna circuit board enclosed in the laminated glass. The obtained antenna system did not show air bubbles or notable optical inconsistency even around the antenna circuit. In the obtained antenna system, since the low-dielectric layer has a lower dielectric constant than that of the glass, the high-frequency waves entering the glass can be transmitted through the low-dielectric layer to reach the antenna circuit board.

Example 15

<Production of Antenna System>

On a lower glass (length 30 cm, width 30 cm, thickness: 3 mm, X-direction dielectric constant: 6.5, Y-direction dielectric constant: 6.5, X-direction dielectric loss tangent: 0.01, Y-direction dielectric loss tangent: 0.01), overlaid was an ionomer resin film (a thin film prepared by heat pressing SentryGlas (registered trademark) SG5000 available from Kuraray Co., Ltd.; 7 cm long, 7 cm wide, 50 μm thick; X-direction dielectric constant: 2.2, Y-direction dielectric constant :2.2, X-direction dielectric loss tangent: 0.002, Y-direction dielectric loss tangent: 0.002). Further, overlaid thereon were the antenna circuit board (5 cm long, 5 cm wide) obtained in Example 1 at the center of the polyvinyl acetal resin film, a dried ionomer resin intermediate film (30 cm long, 30 cm wide, 890 μm thick; SentryGlas (registered trademark) SG5000 available from Kuraray Co., Ltd.), and an upper glass (30 cm long, 30 cm wide, and 3 mm thick) in this order with a fixed position. The antenna circuit board was arranged such that the side with the circuit was in contact with the ionomer resin film. The antenna circuit board was arranged at the center of the lower glass in the in-plane direction.

These overlaid materials were placed in a vacuum bag, and the pressure in the bag was lowered at room temperature and kept for 15 minutes. Then, with the reduced pressure maintained, the temperature was raised to 100°C and kept for 30 minutes. Thereafter, the temperature was lowered, and the reduced pressure was released to obtain the temporarily thermocompressionbonded layers. The temporarily bonded layers were placed into an autoclave to perform treatment for 30 minutes at a temperature of 135°C under a pressure of 12 MPa. As a result, was obtained an antenna system including the layers of the glass (first glass layer) / the ionomer resin film (first low-dielectric layer) / the circuit (circuit layer) / the antenna circuit board inner layer (multilayer board including the TLCP film as an insulation layer) / the copper foil (conductor layer) / the ionomer resin intermediate film (second low-dielectric layer) / the glass (second glass layer) in this order, with the antenna circuit board enclosed in the laminated glass. The obtained antenna system did not show air bubbles or notable optical inconsistency even around the antenna circuit. In the obtained antenna system, since the low-dielectric layer has a lower dielectric constant than that of the glass, the high-frequency waves entering the glass can be transmitted through the low-dielectric layer to reach the antenna circuit board.

Example 16

<Production of Antenna System>

An appropriate amount of triethylene glycol di(2-ethylhexanoate) was applied to a surface of the polyvinyl acetal

resin film of the laminate obtained in Example 1, followed by to be attached to a glass (length: 20 cm, width: 10 cm, thickness: 3 mm, X-direction dielectric constant: 6.5, Y-direction dielectric constant: 6.5, X-direction dielectric loss tangent: 0.01, Y-direction dielectric loss tangent: 0.01) without trapping air therebetween. The antenna circuit board was arranged in a region located inward by 2 cm to 7 cm from an end portion of the glass in the length direction.

The laminate and the glass were heated using a hot air dryer at 50°C for 1 hour to obtain an antenna system including the layers of the glass (first glass layer) / the polyvinyl acetal resin film (low-dielectric layer) / the circuit (circuit layer) / the antenna circuit board inner layer (multilayer board including the TLCP film as an insulation layer) / the copper foil (conductor layer) in this order, with the antenna circuit board arranged on a part of the glass. The obtained antenna system did not show film displacement even when a shear force was applied to the antenna system. In the obtained antenna system, since the low-dielectric layer has a lower dielectric constant than that of the glass, the high-frequency waves entering the glass can be transmitted through the low-dielectric layer to reach the antenna circuit board.

Example 17

<Production of Antenna System>

An appropriate amount of triethylene glycol di(2-ethylhexanoate) was applied to a surface of the polyvinyl acetal resin film of the laminate obtained in Example 3, followed by to be attached to a glass (length: 20 cm, width: 10 cm, thickness: 3 mm, X-direction dielectric constant: 6.5, Y-direction dielectric constant: 6.5, X-direction dielectric loss tangent: 0.01, Y-direction dielectric loss tangent: 0.01) without trapping air therebetween. The antenna circuit board was arranged in a region located inward by 2 cm to 7 cm from an end portion of the glass in the length direction.

The laminate and the glass were heated using a hot air dryer at 50°C for 1 hour to obtain an antenna system including the layers of the glass (first glass layer) / the polyvinyl acetal resin film (low-dielectric layer) / the circuit (circuit layer) / the antenna circuit board inner layer (multilayer board including the TLCP film as an insulation layer) / the copper foil (conductor layer) / the polyvinyl acetal resin film (low-dielectric layer) / the thin-plate glass (protective layer) in this order, in which the antenna circuit board with the protective glass plate was arranged on a part of the glass. The obtained antenna system did not show film displacement even when a shear force was applied to the antenna system. In the obtained antenna system, since the low-dielectric layer has a lower dielectric constant than that of the glass, the high-frequency waves entering the glass can be transmitted through the low-dielectric layer to reach the antenna circuit board.

Example 18

<Production of Antenna System>

An antenna system of Example 18 was produced in the same manner as Example 17 except for using dibutoxyethyladipate instead of triethylene glycol di(2-ethylhexanoate). The obtained antenna system included the layers of the glass (first glass layer) / the polyvinyl acetal resin film (low-dielectric layer) / the circuit (circuit layer) / the antenna circuit board inner layer (multilayer board including the TLCP film as an insulation layer) / the copper foil (conductor layer) / the polyvinyl acetal resin film (low-dielectric layer) / the thin-plate glass (protective layer) in this order, in which the antenna circuit board with the protective glass plate was arranged on a part of the glass. The obtained antenna system did not show film displacement even when a shear force was applied to the antenna system. In the obtained antenna system, since the low-dielectric layer has a lower dielectric constant than that of the glass, the high-frequency waves entering the glass can be transmitted through the low-dielectric layer to reach the antenna circuit board.

Example 19

<Production of Antenna System>

An antenna system of Example 19 was produced in the same manner as Example 17 except that the heating using the hot air dryer was changed to heating at 30°C for 24 hours. The obtained antenna system included the layers of the glass (first glass layer) / the polyvinyl acetal resin film (low-dielectric layer) / the circuit (circuit layer) / the antenna circuit board inner layer (multilayer board including the TLCP film as an insulation layer) / the copper foil (conductor layer) / the polyvinyl acetal resin film (low-dielectric layer) / the thin-plate glass (protective layer) in this order, in which the antenna circuit board with the protective glass plate was arranged on a part of the glass. The obtained antenna system did not show film displacement even when a shear force was applied to the antenna system. In the obtained antenna system, since the low-dielectric layer has a lower dielectric constant than that of the glass, the high-frequency waves entering the glass can be transmitted through the low-dielectric layer to reach the antenna circuit board.

Example 20

<Production of Antenna System>

An antenna system of Example 20 was produced in the same manner as Example 18 except that the heating using the hot air dryer was changed to heating at 30°C. The obtained antenna system included the layers of the glass (first glass layer) / the polyvinyl acetal resin film (low-dielectric layer) / the circuit (circuit layer) / the antenna circuit board inner layer (multilayer board including the TLCP film as an insulation layer) / the copper foil (conductor layer) / the polyvinyl acetal resin film (low-dielectric layer) / the thin-plate glass (protective layer) in this order, in which the antenna circuit board with the protective glass plate was arranged on a part of the glass. The obtained antenna system did not show film displacement even when a shear force was applied to the antenna system. In the obtained antenna system, since the low-dielectric layer has a lower dielectric constant than that of the glass, the high-frequency waves entering the glass can be transmitted through the low-dielectric layer to reach the antenna circuit board.

Example 21

<Production of Antenna Circuit Board>

On opposite sides of a TLCP film ("Vecstar" (registered trademark) available from Kuraray Co., Ltd.; thickness: 50 μm, X-direction dielectric constant: 3.4, Y-direction dielectric constant: 3.4, X-direction dielectric loss tangent: 0.002, Y-direction dielectric loss tangent: 0.002) were overlaid copper foils (electrolytic copper foil "H9A" available from Fukuda Metal Foil & Powder Co. Ltd.; thickness: 12 μm). The overlaid materials of the TLCP film and the copper foils on opposite sides of the TLCP film were subjected to thermo-compression bonding by using a vacuum hot press machine with hot plates set to 290°C for 15 minutes under a pressure of 4 MPa to produce a copper clad laminate having a structure of copper foil / TLCP film / copper foil. The copper foil on one of the sides of the obtained copper clad laminate was partially removed by an etching solution to form a circuit, and this operation was repeated to produce an antenna circuit board (3 cm long, 3 cm wide) having a thickness of 400 μm.

<Production of Antenna System>

On a glass (20 cm long, 10 cm wide, 3.5 mm thick; X-direction dielectric constant: 6.5, Y-direction dielectric constant: 6.5, X-direction dielectric loss tangent: 0.01, Y-direction dielectric loss tangent: 0.01), was overlaid a polyvinyl acetal film (3 cm long, 3 cm wide; V200KE available from Kuraray Co., Ltd.; thickness: 700 μm, X-direction dielectric constant: 2.7, Y-direction dielectric constant: 2.7, X-direction dielectric loss tangent: 0.02, Y-direction dielectric loss tangent: 0.02) such that an upper end of the film was located 2-cm away (inward) from an upper end of the glass in the length direction, and a center part of the film in the width direction overlapped with a center part of the glass in the width direction. Thereon, was overlaid the antenna circuit board produced as described above such that the side with the circuit was in contact with the polyvinyl acetal film. Then, the glass with the overlaid materials were placed in a vacuum bag with the position of the antenna circuit board maintained to perform treatment for 30 minutes at a temperature of 100°C under a reduced pressure. After cooling, the reduced pressure was released, and the antenna circuit board was prelaminated on the glass. Thereafter, the layers were placed into an autoclave to perform treatment for 30 minutes at a temperature of 140°C under a pressure of 1.2 MPa. As a result, was obtained an antenna system including the layers of the glass (first glass layer) / the polyvinyl acetal film (low-dielectric layer) / the circuit (circuit layer) / the antenna circuit board inner layer (multilayer board including the TLCP film as an insulation layer) / the copper foil (conductor layer) in this order, in which the antenna circuit board was arranged on a part of the glass. In the obtained antenna system, the low-dielectric layer has a thickness df of 700 μm, which satisfies the range of $\lambda/4 \times n \pm 0.050$ mm (n = 2) with respect to the wavelength $\lambda$ (1.47mm) of the target high-frequency waves.

Where the high frequency waves having a wavelength $\lambda$ enter the obtained antenna system from the side of the glass, the high-frequency waves entering the glass can be transmitted through the polyvinyl acetal layer, i.e., the low-dielectric layer to reach the antenna circuit board because the polyvinyl acetal film is smaller than the glass and has a dielectric constant within the range that satisfies the above formula (I).

Since the low-dielectric layer has a thickness satisfying the range of $\lambda/4 \times n \pm 0.050$ mm, the low-dielectric layer can effectively transmit the high-frequency waves to the antenna circuit board.

Example 22

An antenna system of Example 22 is produced in the same manner as Example 21 except for overlaying, instead of the low-dielectric layer used in Example 21, a plurality of polyvinyl acetal films [MFR (190°C, 2.16 kg): 0.75

g/10 min, thickness: 50 μm, X-direction dielectric constant: 2.5, Y-direction dielectric constant: 2.5, X-direction dielectric loss tangent: 0.01, Y-direction dielectric loss tangent: 0.01]. As with Example 21, since the low-dielectric layer in this Example also has a lower dielectric constant than that of the glass, the high-frequency waves entering the glass can be transmitted through the low-dielectric layer to reach the antenna circuit board.

Example 23

An antenna system of Example 23 is produced in the same manner as Example 21 except for using, instead of the low-dielectric layer used in Example 21, an ionomer film (SGR5000 available from Kuraray Co., Ltd.; thickness: 1000 μm, X-direction dielectric constant: 2.2, Y-direction dielectric constant: 2.2, X-direction dielectric loss tangent: 0.002, Y-direction dielectric loss tangent: 0.002). As with Example 21, since the low-dielectric layer in this Example also has a lower dielectric constant than that of the glass, the high-frequency waves entering the glass can be transmitted through the low-dielectric layer to reach the antenna circuit board.

Example 24

An antenna system of Example 24 is produced in the same manner as Example 21 except for using, instead of the TLCP film of the antenna circuit board used in Example 21, a polyimide film (Kapton 300H available from DU PONT-TORAY CO., LTD.; thickness 75 μm, X-direction dielectric constant: 3.3, Y-direction dielectric constant: 3.3, X-direction dielectric loss tangent: 0.007, Y-direction dielectric loss tangent: 0.007) and using a low dielectric adhesive "SAFY" (available from NIKKAN INDUSTRIES Co., Ltd.; dielectric constant :3, dielectric loss tangent :0.005) for adhesion within the antenna circuit board. As with Example 21, since the low-dielectric layer in this Example also has a lower dielectric constant than that of the glass, the high-frequency waves entering the glass can be transmitted through the low-dielectric layer to reach the antenna circuit board.

Example 25

An antenna system of Example 24 is produced in the same manner as Example 24 except for using, instead of the polyimide film used in Example 24, a polyimide film ("Apical NPI" available from Kaneka Corporation; thickness: 50 μm, X-direction dielectric constant: 3.4, Y-direction dielectric constant: 3.4, X-direction dielectric loss tangent: 0.004, Y-direction dielectric loss tangent: 0.004). As with Example 21, since the low-dielectric layer in this Example also has a lower dielectric constant than that of the glass, the high-frequency waves entering the glass can be transmitted through the low-dielectric layer to reach the antenna circuit board.

INDUSTRIAL APPLICABILITY

The antenna system of the present invention can suppress attenuation of the high-frequency waves to enhance the transmission properties of the antenna circuit board for the high-frequency waves and thus can transfer a large amount of information. Therefore, such an antenna system can be advantageously used for applications such as vehicle antenna systems for autonomous driving and constant communication by vehicular devices in so-called connected cars, small-cell base-station antenna systems installed on windows and wall surfaces of buildings, various civil engineering structures (railroad facilities, road facilities, energy facilities, dam and river facilities, water and sewer facilities, airport facilities), etc. For example, the antenna system of the present invention can constitute a window glass of a vehicle or a building or be attached to a vehicle or a building.

Although the present invention has been described in terms of the preferred embodiments thereof with reference to the drawings, those skilled in the art would readily arrive at various changes and modifications in view of the present specification without departing from the scope of the invention. Accordingly, such changes and modifications are included within the scope of the present invention defined by the appended claims.

REFERENCE NUMERALS

100, 200, 300, 400, 500, 600 ···· antenna system
101, 201, 301, 401, 501, 601 ···· first glass layer
202, 302, 502, 602 ···· second glass layer
103, 203, 303, 403 ···· low-dielectric layer
503a, 603a ···· first low-dielectric layer

503b, 603b ···· second low-dielectric layer
104 ···· circuit layer
105 ···· high-frequency insulation layer
106 ···· conductor layer
107 ···· antenna circuit board
308 ···· adhesive layer
408a, 408b ···· fixing member
409 ···· adherend body

## Claims

**1.** An antenna system comprising:

a first glass layer that transmits high-frequency waves;
a low-dielectric layer having a lower dielectric constant than that of the first glass layer, the low-dielectric layer disposed adjacent to the first glass layer and transmitting the high-frequency waves entering through the first glass layer; and
an antenna circuit board disposed adjacent to the low-dielectric layer and including a high-frequency insulation layer that receives the high-frequency waves entering through the low-dielectric layer,
wherein the antenna system is configured to be used at a frequency of 1 GHz or higher.

**2.** The antenna system according to claim 1, wherein the high-frequency insulation layer comprises a thermoplastic liquid crystal polymer or a polyimide.

**3.** The antenna system according to claim 1 or 2, wherein in each of a first direction and a second direction orthogonal to the first direction on a plane, the first glass layer has a dielectric constant eg of from 5.5 to 7.5, and the low-dielectric layer has a dielectric constant $\varepsilon f$ of from 2.0 to 4.0, each dielectric constant being measured at a frequency of 28 GHz.

**4.** The antenna system according to any one of claims 1 to 3, wherein in each of a first direction and a second direction orthogonal to the first direction on a plane, the first glass layer has a dielectric loss tangent $\tan\delta g$ of 0.05 or lower, and the low-dielectric layer has a dielectric loss tangent $\tan\delta f$ of 0.05 or lower, each dielectric loss tangent being measured at a frequency of 28 GHz.

**5.** The antenna system according to any one of claims 1 to 4, wherein the low-dielectric layer comprises at least one selected from a group consisting of a polyvinyl acetal resin, an olefin-vinyl carboxylate copolymer resin, an ionomer resin, and an acrylic resin.

**6.** The antenna system according to any one of claims 1 to 5, wherein the high-frequency insulation layer has a dielectric constant $\varepsilon p$ of from 2.0 to 4.0 in each of a first direction and a second direction orthogonal to the first direction on a plane, the dielectric constant being measured at a frequency of 28 GHz.

**7.** The antenna system according to any one of claims 1 to 6, wherein the high-frequency insulation layer has a dielectric loss tangent $\tan\delta p$ of 0.010 or lower in each of a first direction and a second direction orthogonal to the first direction on a plane, the dielectric loss tangent being measured at a frequency of 28 GHz.

**8.** The antenna system according to any one of claims 1 to 7, wherein a ratio $\varepsilon f/\varepsilon p$ of the dielectric constant $\varepsilon f$ of the low-dielectric layer to the dielectric constant $\varepsilon p$ of the high-frequency insulation layer is from 30/70 to 60/40.

**9.** The antenna system according to any one of claims 1 to 8, wherein the low-dielectric layer has a thickness of ($\lambda/4 \times n \pm 0.050$) mm ($\lambda$ is a wavelength of high-frequency waves; and n is an integer).

**10.** The antenna system according to any one of claims 1 to 9, wherein the first glass layer comprises at least one selected from a group consisting of a soda-lime glass, a borate glass, a borosilicate glass, an aluminosilicate glass, a quartz glass, a non-alkaline glass, and a low-alkaline glass.

**11.** The antenna system according to any one of claims 1 to 10, further comprising a second glass layer,

wherein the low-dielectric layer and the antenna circuit board are arranged between the first glass layer and the second glass layer.

**12.** The antenna system according to any one of claims 1 to 11, wherein the antenna system constitutes a vehicle glass or a building glass.

**13.** The antenna system according to any one of claims 1 to 11, wherein the antenna system is configured to receive radio waves in an installed state in a vehicle, a building, or a civil engineering structure.

**14.** An antenna circuit board configured to be used for the antenna system as recited in any one of claims 1 to 13.

**15.** A laminate comprising:

an antenna circuit board; and
a low-dielectric layer disposed adjacent to the antenna circuit board,
the laminate being configured to be used for the antenna system as recited in any one of claims 1 to 14.

Fig. 1

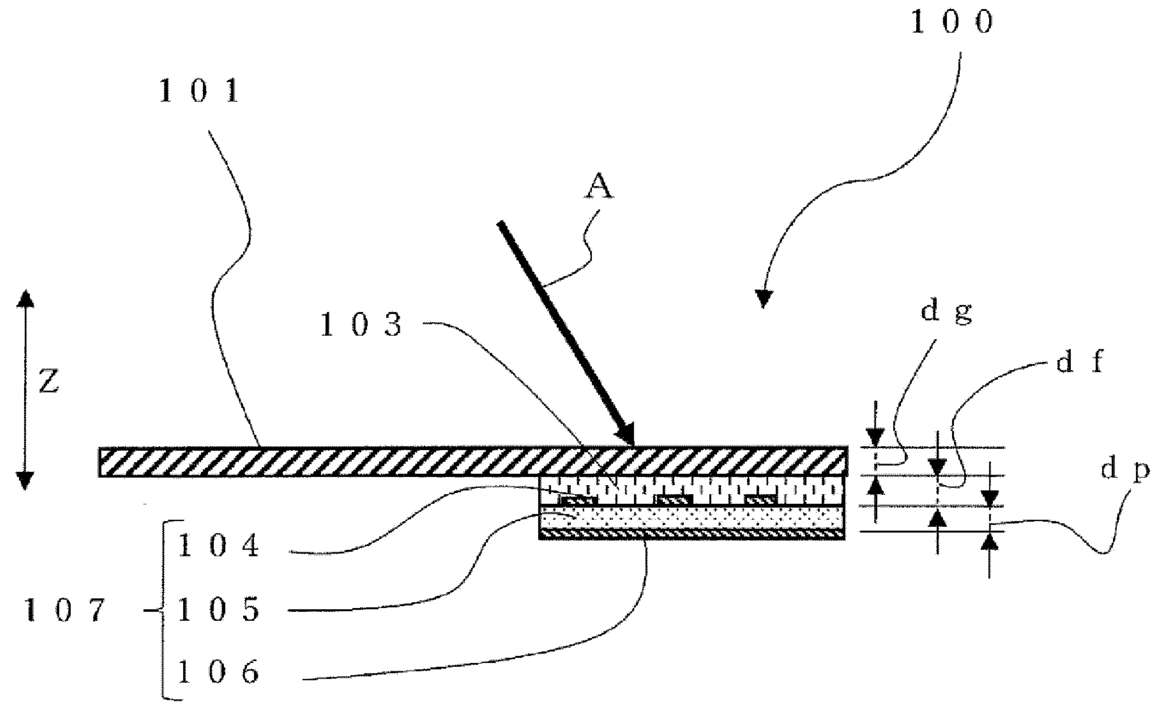
100
101
A
103
Z
dg
df
dp
104
107
105
106

Fig. 2

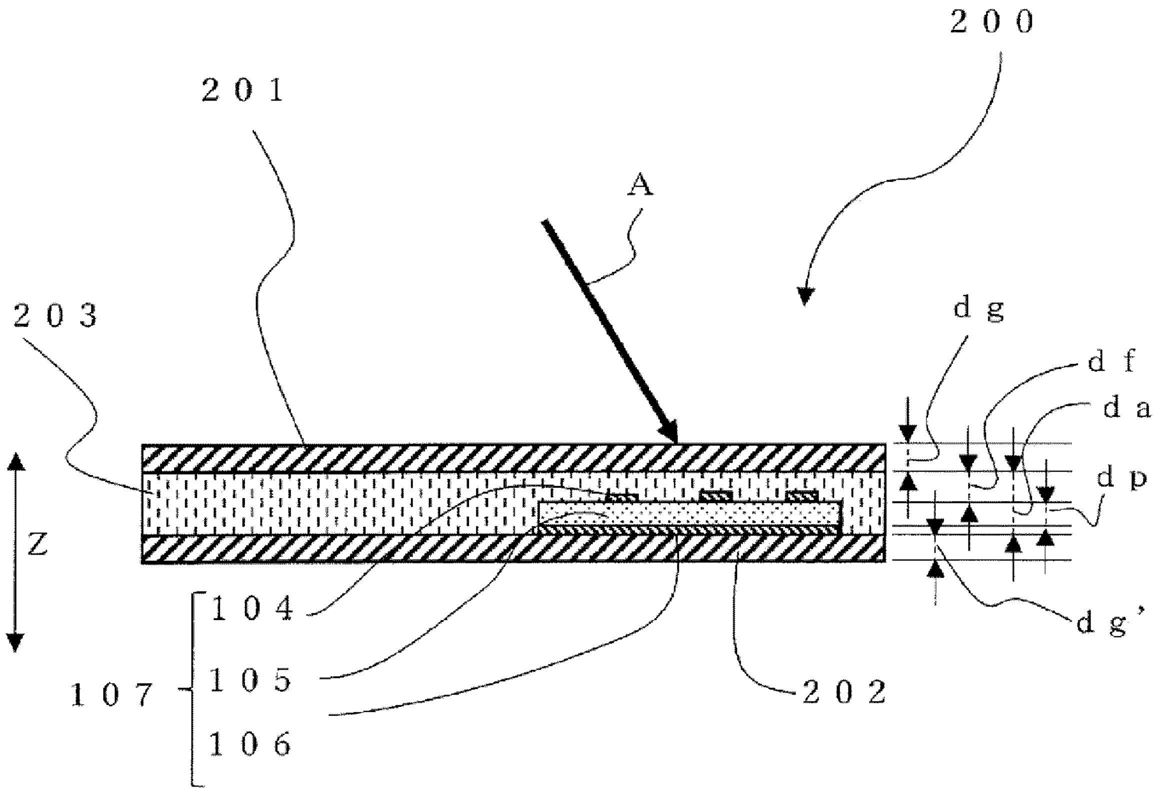
200
201
A
203
dg
df
da
dp
Z
dg'
104
107
105
106
202

Fig. 3

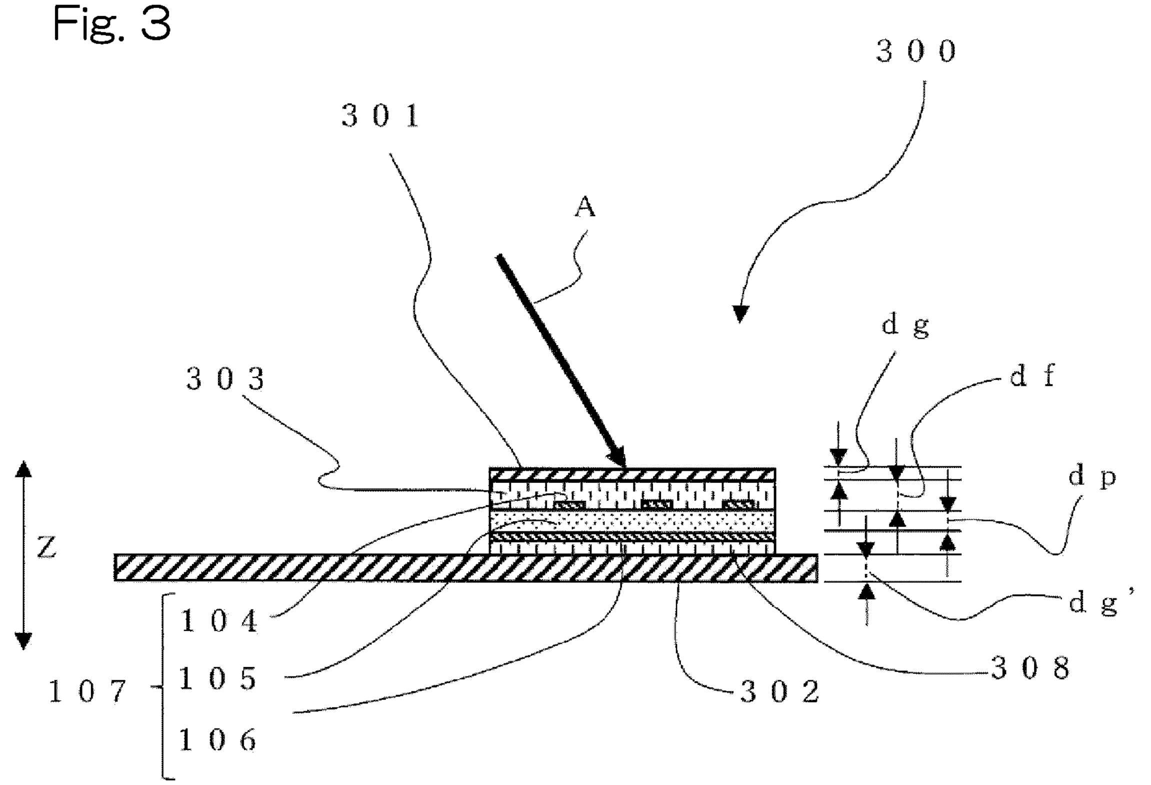
300
301
A
dg
303
df
dp
Z
dg'
104
308
107
105
302
106

Fig. 4

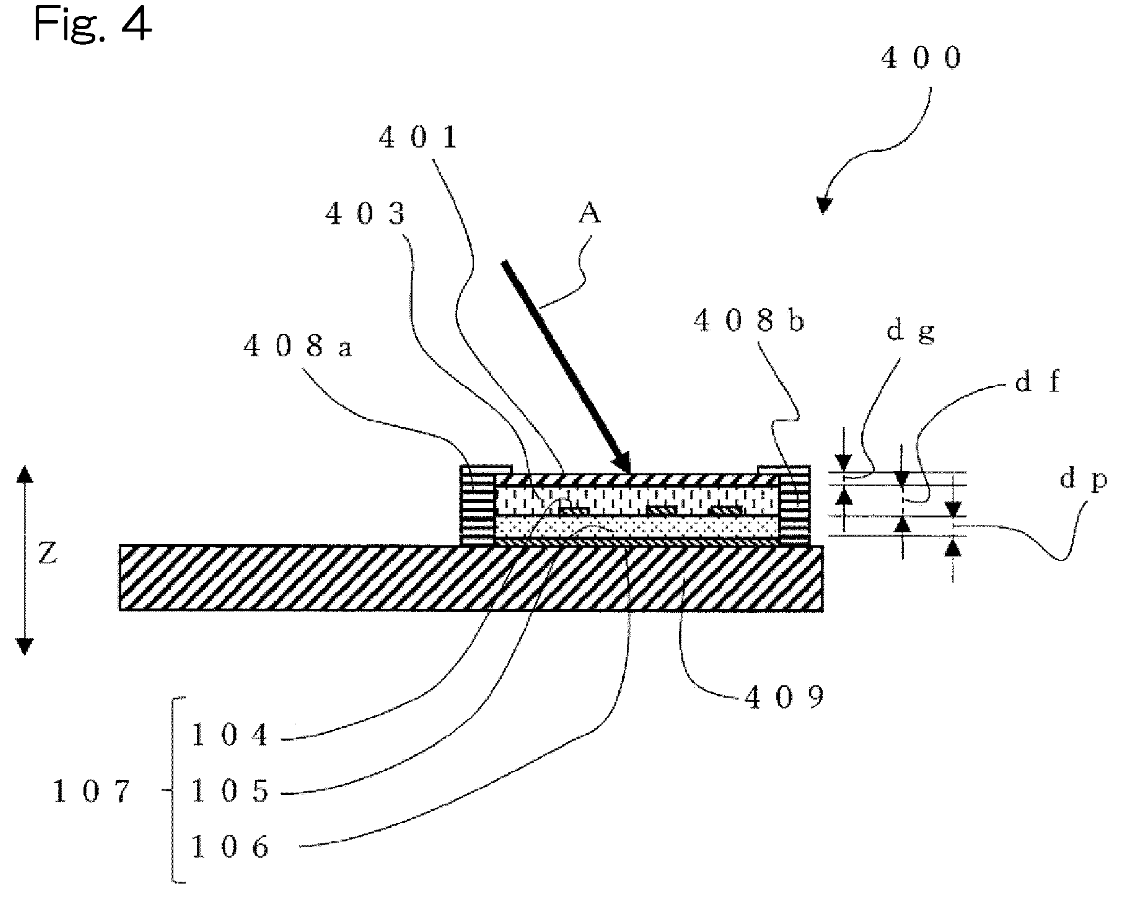
400
401
403
A
408b
dg
408a
df
dp
Z
409
104
107
105
106

Fig. 5

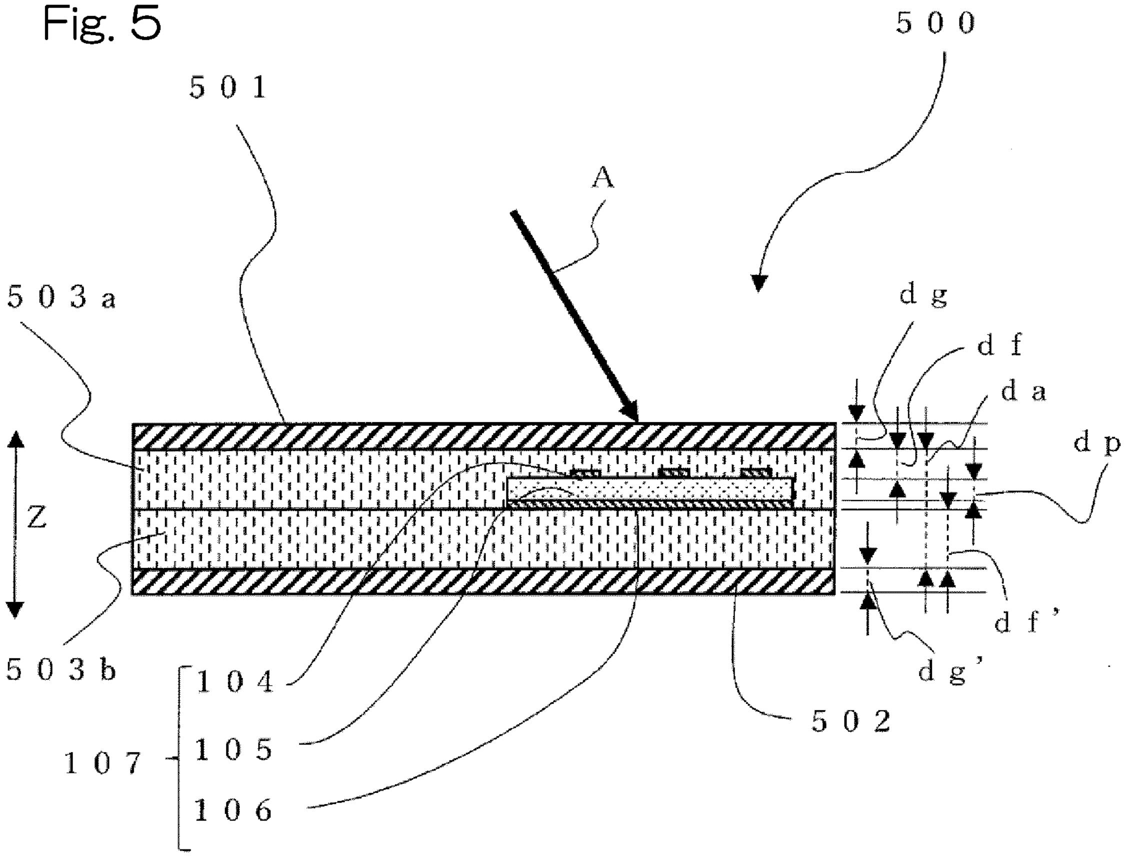
500
501
A
503a
dg
df
da
dp
Z
503b
104
105
106
107
df'
dg'
502

Fig. 6

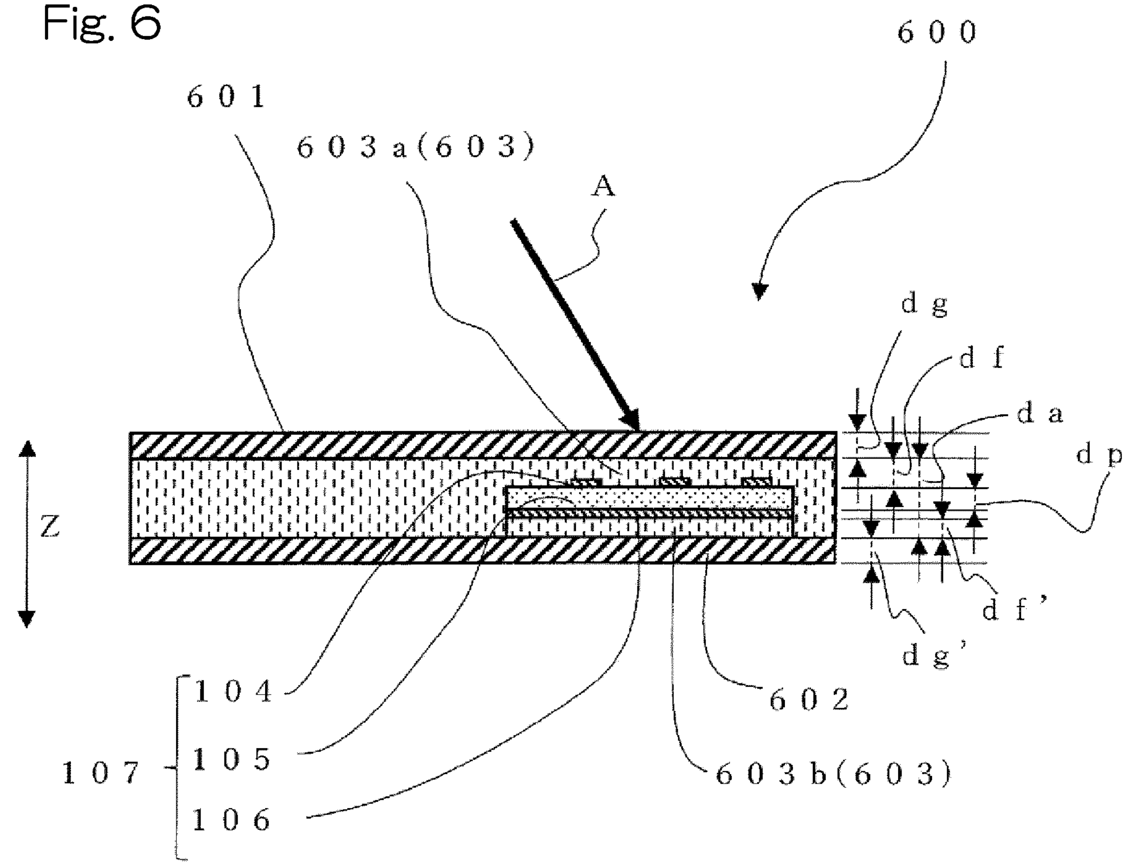
600
601
603a(603)
A
dg
df
da
dp
Z
104
105
106
107
df'
dg'
602
603b(603)

| INTERNATIONAL SEARCH REPORT | International application No. PCT/JP2020/044469 |
|---|---|

**A. CLASSIFICATION OF SUBJECT MATTER**

H01Q 1/22(2006.01)i; H01Q 1/32(2006.01)i; H01Q 1/40(2006.01)i
FI: H01Q1/40; H01Q1/22 C; H01Q1/32 A

According to International Patent Classification (IPC) or to both national classification and IPC

**B. FIELDS SEARCHED**

Minimum documentation searched (classification system followed by classification symbols)
H01Q1/22; H01Q1/32; H01Q1/40

Documentation searched other than minimum documentation to the extent that such documents are included in the fields searched

| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | WO 2019/177144 A1 (AGC INC.) 19 September 2019 (2019-09-19) paragraphs [0019], [0021], [0035], [0037], [0051], [0060]-[0063], fig. 7 | 1-8, 10, 12-15<br>11<br>9 |
| Y | JP 2006-151373 A (ASAHI GLASS CO., LTD.) 15 June 2006 (2006-06-15) paragraphs [0046]-[0048], fig. 9, 12 | 11 |
| A | JP 2014-93609 A (FURUKAWA ELECTRIC CO., LTD.) 19 May 2014 (2014-05-19) paragraphs [0013], [0054]-[0055] | 1-11 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 17 February 2021 (17.02.2021) | 02 March 2021 (02.03.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

International application No.
PCT/JP2020/044469

| Patent Documents referred in the Report | Publication Date | Patent Family | Publication Date |
|---|---|---|---|
| WO 2019/177144 A1 | 19 Sep. 2019 | US 2021/0005951 A1 paragraphs [0083], [0085], [0099], [0101], [0115], [0124]-[0127], fig. 7<br>TW 201939811 A | |
| JP 2006-151373 A | 15 Jun. 2006 | US 2006/0092085 A1 paragraphs [0060]-[0062], fig. 9, 12<br>US 2008/0283173 A1<br>US 2010/0231466 A1<br>EP 1653554 A1<br>KR 10-2006-0052379 A<br>CN 1770552 A | |
| JP 2014-93609 A | 19 May 2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019218850 A
- JP 2020129756 A
- JP 2007053505 A